# EUROPEAN PATENT APPLICATION

(11) **EP 4 693 732 A1**
(43) Date of publication of application: **11.02.2026**
(21) Application number: 25709605.7
(22) Date of filing: 07.03.2025
(51) Int. Cl.: H01Q 1/24, H01Q 13/10, H01Q 21/08, H01Q 5/307, H04M 1/02

(54) **ELECTRONIC DEVICE COMPRISING ANTENNA MODULE AND BRACKET**

(30) Priority: 07.06.2024 KR 20240074607; 26.07.2024 KR 20240099776
(71) Applicant: Samsung Electronics Co., Ltd., Suwon-si, Gyeonggi-do 16677 (KR)
(72) Inventor: PARK, Junyong, Suwon-si, Gyeonggi-do 16677 (KR); KIM, Hoyeon, Suwon-si, Gyeonggi-do 16677 (KR); KIM, Yongwoon, Suwon-si, Gyeonggi-do 16677 (KR); PARK, Eunsoo, Suwon-si, Gyeonggi-do 16677 (KR)
(74) Representative: HGF
(86) International application number: PCT/KR2025/003070
(87) International publication number: WO 2025/254306

(57) **Abstract**

An electronic device includes an antenna module including a printed circuit board (PCB) and a plurality of antennas disposed on the PCB to face a direction, a bracket accommodating the antenna module, the bracket including a first conductive portion disposed behind the PCB of the antenna module, and a second conductive portion, extending perpendicularly from the first conductive portion, the second conductive portion including a first set of openings, and a conductive structure spaced apart from the second conductive portion, the conductive structure including a second set of openings. Each opening in the first set of openings is disposed between each of antenna of the plurality of antennas and each opening in the second set of openings.

## Description

### [Technical Field]

The present disclosure relates to an electronic device comprising an antenna module and a bracket.

### [Background Art]

An electronic device may include one or more antenna modules for wireless communication with an external electronic device. For example, the electronic device may include an antenna module for 5G communication. The antenna module may meet the performance of 5G communication through beamforming, which concentrates a signal in a specific direction.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

An electronic device is provided. The electronic device may comprise an antenna module comprising a printed circuit board (PCB) and a plurality of antennas disposed on the PCB to face a direction of a side wall of the electronic device. The electronic device may comprise a bracket accommodating the antenna module, the bracket including a first conductive portion disposed behind the PCB of the antenna module, and a second conductive portion, extending perpendicularly from the first conductive portion, the second conductive portion including a first set of openings formed therethrough. The electronic device may comprise a conductive structure spaced apart from the second conductive portion, the conductive structure including a second set of openings formed therethrough. Each opening in the first set of openings may be disposed between each of antenna of the plurality of antennas and each opening in the second set of openings.

An electronic device is provided. The electronic device may comprise an antenna module including a printed circuit board (PCB) and a plurality of antennas disposed on the PCB to face in a direction of a side wall of the electronic device. The electronic device may comprise a bracket accommodating the antenna module, the bracket comprising a first conductive portion disposed behind the PCB of the antenna module, a second conductive portion, extending perpendicularly from the first conductive portion, the second conductive portion including a first set of openings formed therethrough, and a conductive structure spaced apart from the second conductive portion, the conductive structure including a second set of openings formed therethrough. Each opening in the first set of openings may be disposed between each of antenna of the plurality of antennas and each opening in the second set of openings.

An electronic device is provided. The electronic device may comprise: an antenna module comprising a PCB and a plurality of antennas disposed on the PCB to face in a direction; a bracket configured to accommodate the antenna module, the bracket including: a first conductive portion disposed behind, with respect to the direction, the PCB of the antenna module, and a second conductive portion, extending perpendicularly from the first conductive portion, the second conductive portion including a first set of openings formed therethrough; and a conductive structure spaced apart from the second conductive portion, the conductive structure including a second set of openings formed therethrough, wherein each opening in the first set of openings may be disposed between an antenna of the plurality of antennas and an opening in the second set of openings.

An electronic device is provided. The electronic device may comprise: an antenna module comprising a PCB and a plurality of antennas disposed on a first surface of the PCB to face in a first direction perpendicular to the first surface; a bracket configured to accommodate the antenna module, the bracket including: a first conductive portion disposed to face a second surface of the PCB of the antenna module, wherein the second surface is opposite the first surface, and a second conductive portion, extending perpendicularly from the first conductive portion in the first direction and disposed to face a third surface of the PCB of the antenna module, wherein the third surface is disposed between the first surface and the second surface to connect the first surface and the second surface, the second conductive portion including a first set of openings formed through the second conductive portion in a second direction perpendicular to the third surface; and a conductive structure spaced apart from the second conductive portion in the second direction, the conductive structure including a second set of openings formed through the conductive structure in the second direction. Each opening in the first set of openings may be disposed between an antenna of the plurality of antennas and an opening in the second set of openings.

### [Description of the Drawings]

FIG. 1 is a block diagram of an electronic device in a network environment according to an embodiment.
FIG. 2 is a front view of an electronic device according to an embodiment.
FIGS. 3A and 3B illustrate an antenna module according to an embodiment.
FIG. 3C is a cross-sectional view of the antenna module of FIG. 3A cut along line A-A'.
FIG. 4 is a side view of an electronic device according to an embodiment.
FIG. 5A is a diagram for explaining constructive interference by a double slit.
FIG. 5B illustrates a current distribution of a bracket by an operation of an antenna module according to an embodiment.
FIG. 6A illustrates an arrangement structure of an antenna module and a bracket according to an embodiment.
FIG. 6B illustrates the antenna module and the bracket of FIG. 6A.
FIG. 6C illustrates a first set of openings formed in a second conductive portion of the bracket of FIG. 6A.
FIG. 7A illustrates an arrangement structure of an antenna module and a bracket according to an embodiment.
FIG. 7B illustrates the antenna module and the bracket of FIG. 7A.
FIG. 7C illustrates a first set of openings formed in a second conductive portion of the bracket of FIG. 7A.
FIG. 8A illustrates a conductive structure of the bracket of FIG. 6A when viewed from below.
FIG. 8B illustrates a conductive structure of the bracket of FIG. 7A when viewed from below.
FIG. 9A illustrates an arrangement structure of an antenna module and a bracket according to an embodiment.
FIG. 9B illustrates the antenna module and the bracket of FIG. 9A.
FIG. 10A is a CDF-EIRP graph of an electronic device according to a comparative example including a bracket without openings.
FIG. 10B is a CDF-EIRP graph of an electronic device according to a comparative example including a bracket comprising only a first set of openings.
FIG. 10C is a CDF-EIRP graph of an electronic device according to an embodiment including a bracket comprising a first set of openings and a second set of openings.
FIG. 11A illustrates a radiation pattern formed around an electronic device according to a comparative example including a bracket comprising a first set of openings.
FIG. 11B illustrates a radiation pattern formed around an electronic device according to an embodiment including a bracket comprising a first set of openings and a second set of openings.
FIG. 12 is a front view of an electronic device according to an embodiment.
FIG. 13 illustrates an electronic device according to an embodiment.
FIG. 14 illustrates a portion of the electronic device of FIG. 13.

### [Mode for Invention]

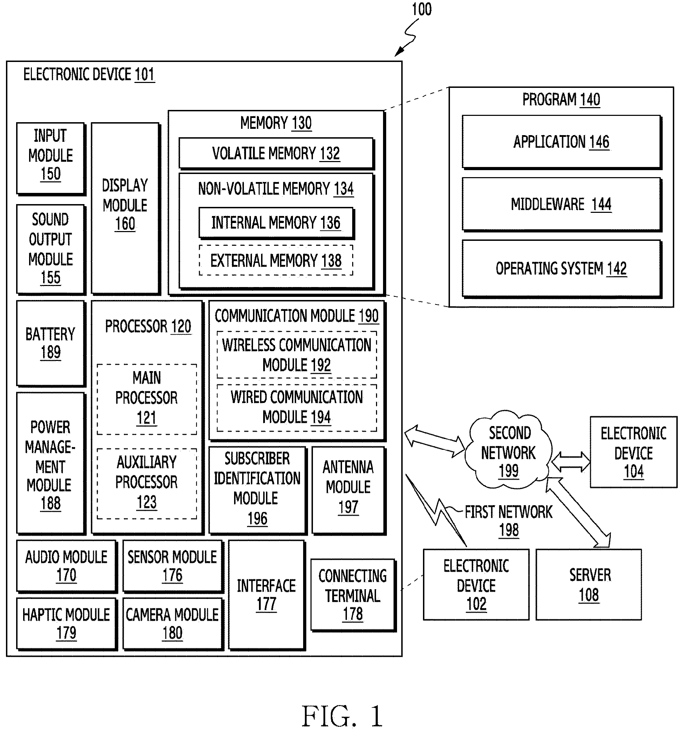

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In this disclosure, terms such as "above", "below", "top", and "bottom" should be understood as terms specified for convenience of explanation, which indicate relative positional relationships rather than absolute positional relationships.

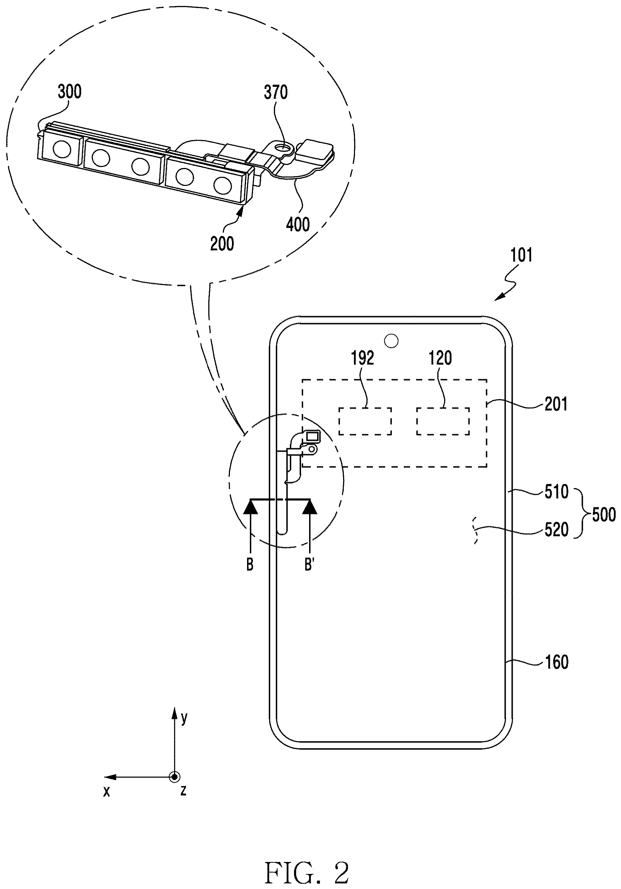

FIG. 2 is a front view of an electronic device according to an embodiment.

An electronic device (e.g., the electronic device 101 of FIG. 1) according to an embodiment may include an antenna module 200 (e.g., the antenna module 197 of FIG. 1) for wireless communication with an external electronic device.

According to an embodiment, at least one processor (e.g., the processor 120 of FIG. 1) may be configured to communicate with an external electronic device using the antenna module 200. According to an embodiment, the electronic device 101 may include a flexible printed circuit board 400 for electrically connecting the antenna module 200 with a printed circuit board 201 on which at least one processor 120 and a wireless communication module (e.g., the wireless communication module 192 of FIG. 1) are disposed. The flexible printed circuit board 400 may be configured to transmit an electrical signal between at least one processor and the antenna module 200, by being connected to the antenna module 200 and the printed circuit board 201, respectively.

According to an embodiment, the antenna module 200 may be disposed in a housing 500 of the electronic device 101. The housing 500 may include a peripheral part 510 and a supporting part 520.

According to an embodiment, the peripheral part 510 may define at least a portion of a sidewall of the electronic device 101. The supporting part 520 may be surrounded by the peripheral part 510. The supporting part 520 may support or accommodate components (e.g., one or more electronic components) of the electronic device 101. For example, the supporting part 520 may support the printed circuit board 201, a battery (e.g., the battery 189 of FIG. 1), a camera module (e.g., the camera module 180 of FIG. 1), and/or the antenna module 200, which are disposed on the supporting part 520. The supporting part 520 may be disposed under a display module (e.g., the display module 160 of FIG. 1) (e.g., -z direction), and may be invisible from the outside of the electronic device 101.

The electronic device 101 according to an embodiment may include a bracket 300 supporting and accommodating the antenna module 200. The bracket 300 may be fixed to the supporting part 520 in a state accommodating the antenna module 200, to protect the antenna module 200 and maintain a position of the antenna module 200 at a fixed position. For example, the bracket 300 may include a through hole 370 through which a fastener passes. The fastener may be coupled to the supporting part 520 by passing through the through hole 370. For example, the fastener may include a screw, but is not limited thereto.

According to an embodiment, the antenna module 200 may include an mmWave module capable of supporting a high-frequency band (e.g., a millimeter wave (mmWave) band). The mmWave module may be used to transmit and/or receive signals on a mmWave frequency band (e.g., about 24 GHz or more). The mmWave module may improve communication performance of the electronic device 101 by providing a high-speed data transmission and a wide bandwidth.

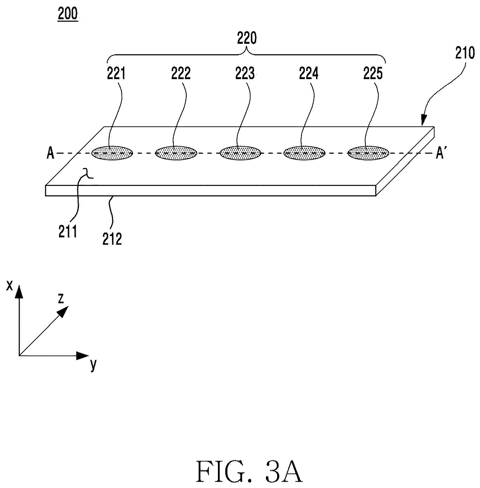

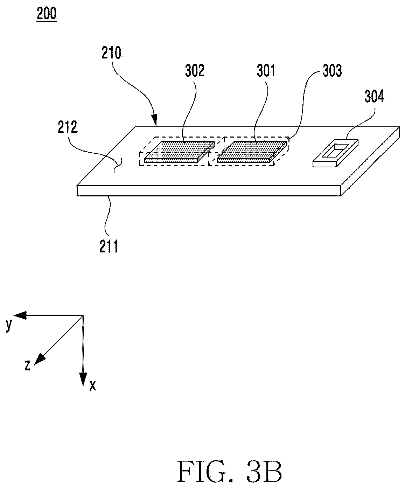

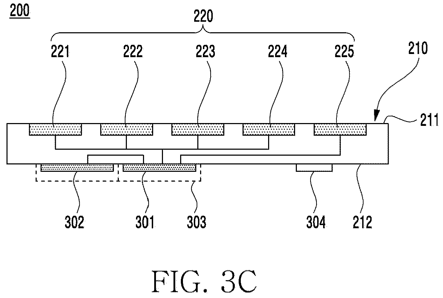

FIGS. 3A and 3B illustrate an antenna module according to an embodiment. FIG. 3C is a cross-sectional view of the antenna module of FIG. 3A cut along line A-A'.

FIGS. 3A and 3B illustrate an example of a structure of an antenna module 200 described with reference to FIG. 2. FIG. 3A is a perspective view of the antenna module 200 viewed from a side, and FIG. 3B is a perspective view of the antenna module 200 viewed from another side opposite to the side.

Referring to FIG. 3A, the antenna module 200 may include a printed circuit board 210 and a plurality of antennas 220. For example, the plurality of antennas 220 may include a first antenna element 221, a second antenna element 222, a third antenna element 223, a fourth antenna element 224, and/or a fifth antenna element 225, but it is not limited thereto. The plurality of antennas 220 may be arranged on a first surface 211 of the printed circuit board 210. The plurality of antennas 220 may be arranged side by side on the first surface 211 of the printed circuit board 210. For example, the plurality of antennas 220 may be arranged in a y-axis direction of FIG. 3A.

According to an embodiment, the printed circuit board 210 may include a plurality of conductive layers and a plurality of non-conductive layers alternately stacked with the plurality of conductive layers. The printed circuit board 210 may provide an electrical connection between the printed circuit board 210 and/or various electronic components disposed outside the printed circuit board 210 by using wirings formed on the conductive layer and conductive vias. According to an embodiment, the printed circuit board 210 may include a first surface 211 facing in a direction (e.g., +x direction) and a second surface 212 opposite to the first surface 211.

According to an embodiment, the plurality of antennas 220 may be configured to form a directional beam. The plurality of antennas 220 may be disposed on the first surface 211 of the printed circuit board 210. The plurality of antennas 220 may all have the same shape or may each have a different shape. The plurality of antennas 220 may be arranged for directivity of the directional beam. The antenna module 200 may form a beam with high directivity through an arrangement of the plurality of antennas 220 and a polarization beam radiated from each of the plurality of antennas 220, and may be configured to communicate using the beam.

Referring to FIGS. 3B and 3C, a radio frequency integrated circuit (RFIC) 301 and a power management IC (PMIC) 302 may be disposed on the second surface 212 of the printed circuit board 210. For example, at least one processor (e.g., the processor 120 of FIG. 1) may generate a baseband signal. The baseband signal may be up-converted to a signal in a designated frequency band through the RFIC 301. The up-converted signal may be filtered through a radio frequency front end module (RFFE), and radiated to the outside of the electronic device 101 through the antenna module 200. For example, a signal received from an external electronic device through the antenna module 200 may be preprocessed through the RFFE. The RFIC 301 may down-convert the preprocessed wireless signal into a baseband signal so that the preprocessed wireless signal may be processed by at least one processor. The down-converted signal may be provided to a wireless communication module (e.g., the wireless communication module 192 of FIG. 1) and at least one processor, which are disposed on a printed circuit board (e.g., the printed circuit board 201 of FIG. 1).

According to an embodiment, the RFIC 301 may up-convert an IF signal obtained from an intermediate frequency integrate circuit (IFIC) into an RF signal in a selected band when transmitting. When receiving, the RFIC 301 may down-convert the RF signal obtained through the antenna array, convert the RF signal into an IF signal, and transmit it to the IFIC.

According to an embodiment, the PMIC 302 may receive a voltage from a printed circuit board (e.g., the printed circuit board 201 of FIG. 2) and provide power necessary for electronic components (e.g., the RFIC 301) disposed on the printed circuit board 210.

According to an embodiment, the RFIC 301 and the PMIC 302 may be covered by a shielding member 303. The shielding member 303 may be disposed on the second surface 212 of the printed circuit board 210 to electromagnetically shield at least one of the RFIC 301 or the PMIC 302. For example, the shielding member 303 may include a shield can.

According to an embodiment, a connector 304 may be disposed on the second surface 212 of the printed circuit board 210. The connector 304 may be connected to a flexible printed circuit board (e.g., the flexible printed circuit board 400 of FIG. 2) to provide an electrical connection between the printed circuit board 210 and the antenna module 200. The RFIC 301 and/or the PMIC 302 of the antenna module 200 may be electrically connected to the printed circuit board 201 through the flexible printed circuit board 400 connected to the connector 304.

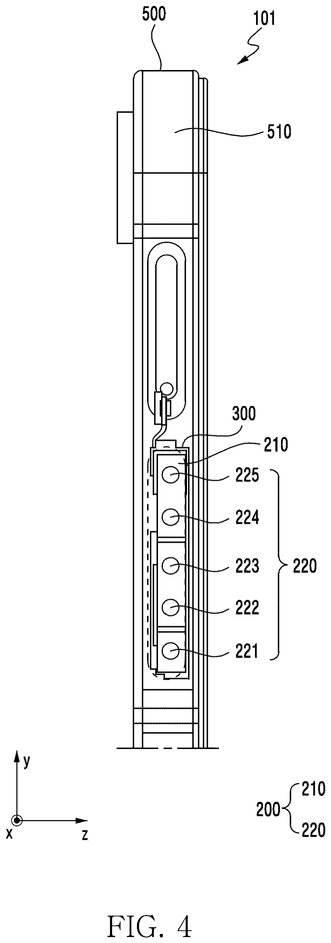

FIG. 4 is a side view of an electronic device according to an embodiment.

Referring to FIG. 4, the antenna module 200 may include a printed circuit board 210 and a plurality of antennas 220. The antenna module 200 including the plurality of antennas 220 may be referred to as an array antenna. The plurality of antennas 220 may support a beamforming technology through a multi-antenna arrangement, and may form a directional beam to transmit and/or receive a signal in a high-frequency band. The electronic device 101 may form a directional beam by having a main lobe of a radiation pattern in a designated direction and minimizing a side lobe using elements such as a phase shifter and a power amplifier.

For example, the antenna module 200 may include five antennas (e.g., a first antenna element 221, a second antenna element 222, a third antenna element 223, a fourth antenna element 224, and a fifth antenna element 225)) having a 1×5 arrangement configured to form the beam, but is not limited thereto. The antenna module 200 may form the beam using a combination of at least some of the plurality of antennas 220. Since the beam formed by the plurality of antennas 220 has strong straightness, it may be arranged to face a direction in which signal transmission and/or reception is easy.

According to an embodiment, the plurality of antennas 220 of the antenna module 200 may be disposed on the printed circuit board 210 to face a direction of a side wall of the electronic device 101. The plurality of antennas 220 being disposed to face the side wall of the electronic device 101 may refer to the plurality of antennas 220 positioned within the housing 500 being disposed to face a portion of a peripheral part 510 of the electronic device 101. The beam formed from the plurality of antennas 220 may be formed in a direction (e.g., +x direction) substantially toward a portion of the peripheral part 510. However, it will be appreciated that the present disclosure is not limited to the plurality of antennas 220 facing a direction of a side wall of the electronic device. In some embodiments, plurality of antennas 220 (or first surface 211 of the printed circuit board 210) may face a front or rear of the electronic device 101, and the beam formed from the plurality of antennas 220 may be formed in a direction (e.g., +z or -z direction) substantially toward a front or rear of the electronic device 101. The antenna module 200 may be configured to receive a signal from an external electronic device or transmit a signal to an external electronic device using the beam.

Since the antenna module 200 transmits and/or receives a signal using the beam, a coverage of the antenna module 200 may be related to the beam. Since a directional beam is formed with concentration in a specific direction, it may enable a high-speed data transmission and cover a relatively long distance, but it may have a relatively low coverage.

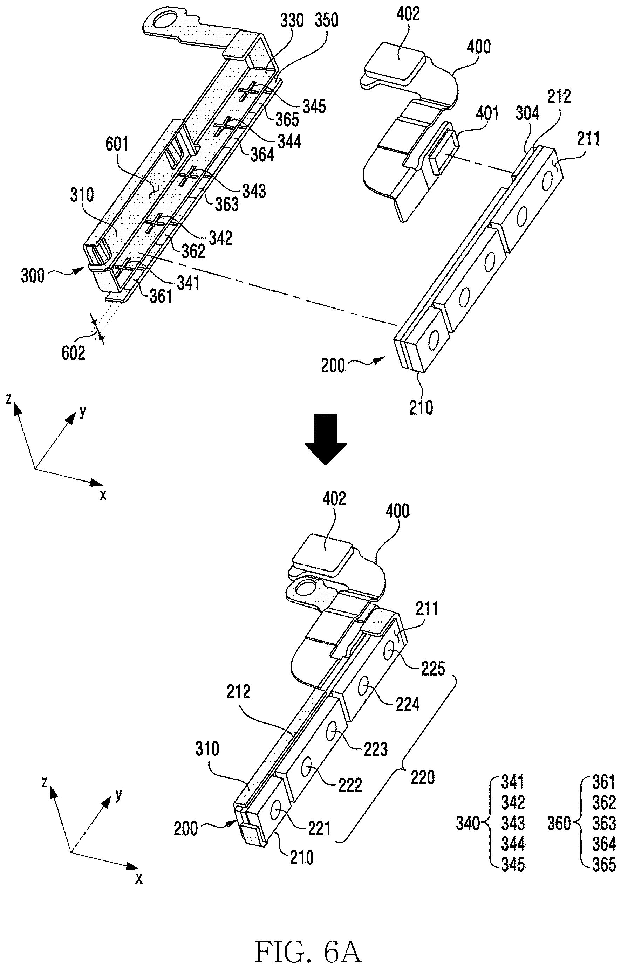

The electronic device 101 according to an embodiment may include a bracket 300 including a plurality of openings (e.g., a first set of openings 340 and/or a second set of openings 360 of FIG. 6A) in order to expand a coverage of the antenna module 200. The bracket 300 may include a plurality of openings (e.g., slits) for causing reflection and/or diffraction of electromagnetic waves from the plurality of antennas 220. Electromagnetic waves from the plurality of antennas 220 may be reflected and/or diffracted through the plurality of openings (e.g., slits). As the reflection and/or diffraction of the electromagnetic waves cause a change in a radiation pattern of the antenna module 200, the coverage of the antenna module 200 may be expanded.

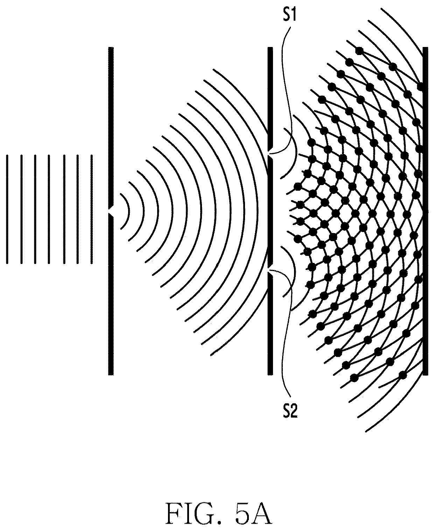

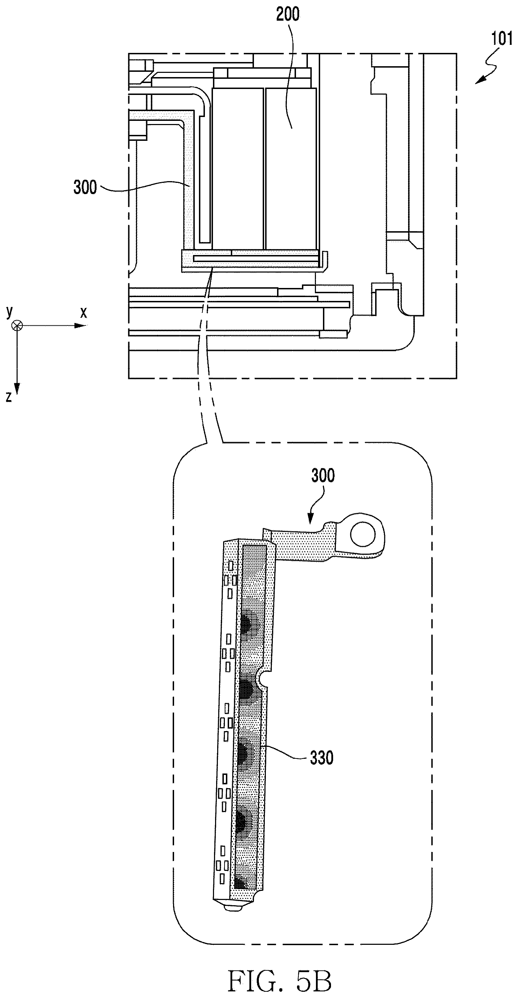

FIG. 5A is a diagram for explaining constructive interference by a double slit. FIG. 5B illustrates a current distribution of a bracket by an operation of an antenna module according to an embodiment.

FIG. 5A is a diagram showing Thomas Young's double slit experiment, and a coverage expansion of an antenna module (e.g., the antenna module 200 of FIG. 2) according to an embodiment may be supported through a diffraction effect and Huygens principle by double slits S1 and S2 spaced apart, for example by a certain interval. Referring to FIG. 5A, when electromagnetic waves are radiated to a space, electromagnetic waves are propagated while forming wave fronts according to the Huygens principle. If the electromagnetic waves pass through the double slits S1 and S2, electromagnetic waves passing through the slits propagate while diffracting and forming a plurality of wavefronts, and the plurality of wavefronts propagate while overlapping each other. The electromagnetic waves passing through the double slits S1 and S2 cause constructive interference or destructive interference according to a phase, so that the electromagnetic waves are strengthened or weakened.

The cross-sectional view illustrated in FIG. 5B is a cross-sectional view of the electronic device 101 of FIG. 2 cut along line B-B'. Referring to FIG. 5B, when the antenna module 200 transmits or receives a signal, a current may be concentrated in a specific area of the antenna module 200. When the antenna module 200 operates, a current flows through a radiator (e.g., the plurality of antennas 220 of FIG. 4), and an electromagnetic field may be formed around the antenna module 200 by the current. Since the antenna module 200 may radiate electromagnetic waves through the electromagnetic field, reflection or diffraction effects of electromagnetic waves may be increased within an area in which the current is concentrated.

A current distribution diagram illustrated in FIG. 5B indicates a distribution of current formed in the bracket 300 when the antenna module 200 operates. Areas illustrated in the distribution diagram are areas having currents of substantially identical strengths, and the currents within the same area may have substantially identical strengths. In the current distribution diagram of FIG. 5B, as the current strength increases, the density of hatching in the areas is shown to increase.

According to an embodiment, when the antenna module 200 operates, current may be concentrated on a portion (e.g., the second conductive portion 330) of the bracket 300 close to a plurality of antennas (e.g., the plurality of antennas 220 of FIG. 4). Referring to the current distribution diagram illustrated in FIG. 5B, areas in which current is concentrated may be formed at a position corresponding to each of the plurality of antennas 220, in the second conductive portion 330. When openings (e.g., slits) are formed in areas where the current is concentrated in the second conductive portion 330, reflection and/or diffraction effects of electromagnetic waves by the openings may be expected. The areas where the current is concentrated may be areas corresponding to each of the plurality of antennas 220. Since radiation of electromagnetic waves may be smooth in areas where the current is concentrated, reflection and/or diffraction of electromagnetic waves may be caused by forming an opening (e.g., slit) in the areas. Since the reflection and/or diffraction of electromagnetic waves may cause constructive interference of electromagnetic waves, a radiation pattern may be changed. According to an embodiment, a coverage of the antenna module 200 may be expanded by changing the radiation pattern.

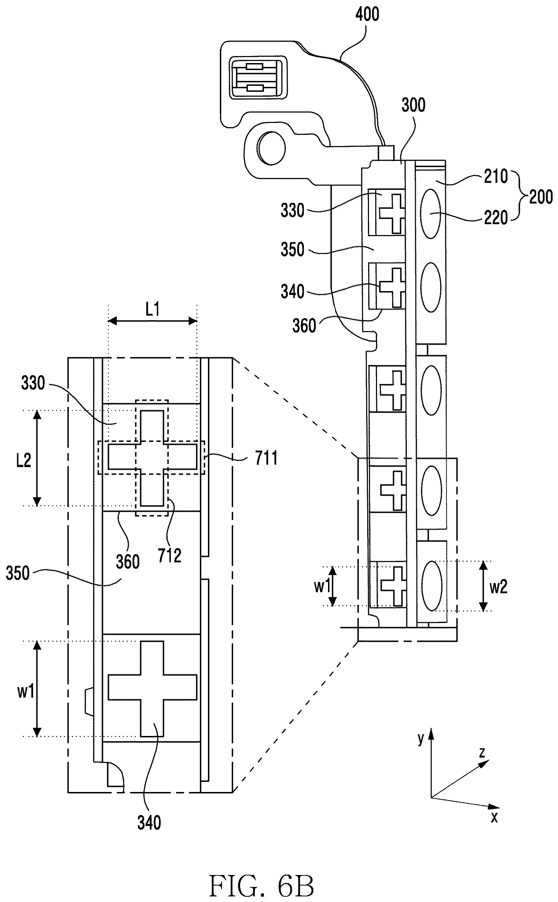

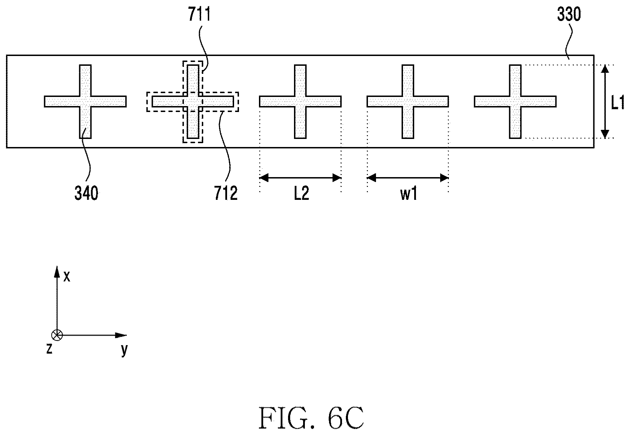

FIG. 6A illustrates an arrangement structure of an antenna module and a bracket according to an embodiment. FIG. 6B illustrates the antenna module and the bracket of FIG. 6A. FIG. 6C illustrates a first set of openings formed in a second conductive portion of the bracket of FIG. 6A.

Referring to FIG. 6A, a printed circuit board 210 of an antenna module 200 may be connected to a flexible printed circuit board 400. The flexible printed circuit board 400 may include a first connector 401 connected to a connector (e.g., the connector 304 of FIG. 3B) on a second surface 212 of the printed circuit board 210 and a second connector 402 connected to a printed circuit board (e.g., the printed circuit board 201 of FIG. 2). A plurality of antennas 220 may be disposed on a first surface 211 of the printed circuit board 210. The first surface 211 of the printed circuit board 210 may face a direction (e.g., +x direction). For example, the antenna module 200 may include five antennas 220 (e.g., a first antenna element 221, a second antenna element 222, a third antenna element 223, a fourth antenna element 224, and a fifth antenna element 225) having a 1×5 arrangement.

According to an embodiment, the bracket 300 may include a first conductive portion 310 and a second conductive portion 330. The first conductive portion 310 may be disposed to face at least a portion of the second surface 212 of the printed circuit board 210. The second conductive 330 portion may be disposed to face at least a portion of a third surface of the printed circuit board 210 that is disposed between the first surface 211 and the second surface 212 (i.e. a side surface of the printed circuit board). For example, the first conductive portion 310 and the second conductive portion 330 may have a shape surrounding at least a portion of the antenna module 200 to support the antenna module 200. As at least a portion of the second surface 212 of the printed circuit board 210 is in contact with the first conductive portion 310, and a lower/third surface (e.g., a side surface of the printed circuit board 210 facing the -z direction) of the printed circuit board 210 is in contact with the second conductive portion 330, the antenna module 200 may be supported by the bracket 300. In addition, the first conductive portion 310 may be in contact with a portion of an upper surface (e.g., a side surface of the printed circuit board 210 facing the +z direction) of the printed circuit board 210, and the second conductive portion 330 may be in contact with another portion of the upper surface of the printed circuit board 210 and at least a portion of a side surface (e.g., a side surface of the printed circuit board 210 facing the +x direction, and a side surface of the printed circuit board 210 facing the -x direction) of the printed circuit board 210.

According to an embodiment, the second conductive portion 330 may extend substantially perpendicularly from the first conductive portion 310. For example, at least a portion of the second conductive portion 330 may extend substantially in the direction. For example, at least a portion of the second conductive portion 330 may protrude in a direction (e.g., the +x direction) perpendicular to a lower portion of the first conductive portion 310. A space 601 in which the antenna module 200 may be disposed may be formed by the first conductive portion 310 and the second conductive portion 330 that are perpendicular to each other, and the antenna module 200 may be accommodated in the bracket 300 by being inserted into the space 601. The first conductive portion 310 may be referred to as a side wall portion, and the second conductive portion 330 may be referred to as a bottom portion.

The flexible printed circuit board 400 connected to the connector 304 of the printed circuit board 210 may be bent at least partially along an outer surface of the bracket 300. In a state that the antenna module 200 is inserted into the space 601, as the bracket 300 is coupled to the supporting part (e.g., the supporting part 520 of FIG. 2), the bracket 300 may fix the antenna module 200 to a designated position inside a housing (e.g., the housing 500 of FIG. 2).

According to an embodiment, since the plurality of antennas 220 are disposed on the first surface 211 of the printed circuit board 210 facing a direction (e.g., +x direction), the plurality of antennas 220 may face the direction. For example, the direction may be referred to as a direction of the sidewall of an electronic device (e.g., the electronic device 101 of FIG. 2) formed by a peripheral part (e.g., the peripheral part 510 of FIG. 2). The beam formed from the plurality of antennas 220 may have directivity substantially corresponding to the direction. For example, a main lobe of a radiation pattern formed by the plurality of antennas 220 may substantially face the direction, and the beam may have directivity in the direction corresponding to a direction of the main lobe.

As described above, the antenna module 200 may be configured to communicate with an external electronic device through beamforming to concentrate a signal in a specific direction through the plurality of antennas 220. Through the beamforming, a coverage in a specific direction may be improved, but since the beam has a relatively narrow beam width, it may cause a relatively narrow coverage. The bracket 300 according to an embodiment may include a plurality of openings (e.g., slits) that cause reflection and/or diffraction of electromagnetic waves to expand the coverage of the antenna module 200.

According to an embodiment, the second conductive portion 330 may extend from a lower portion of the first conductive portion 310 in a direction (e.g., +x direction) perpendicular to the first conductive portion 310. The second conductive portion 330 may include a first set of openings 340. Each opening may be formed through the second conductive portion 330, i.e. each opening may go all the way through the second conductive portion 330 from one side to the other. That is, each opening may have an entrance on one surface of the second conductive portion 330 and may penetrate through the entire thickness of the second conductive portion 330 to an exit on the opposite side of the second conductive portion 330. For example, the first set of openings 340 may be formed below the antenna module 200 (e.g., in the -z direction). Each opening of the first set of openings 340 may correspond to a corresponding antenna of the plurality of antennas 220. For example, when the antenna module 200 includes five antennas 220 having a 1×5 arrangement, the first set of openings 340 may include five openings corresponding to each of the five antennas 220. For example, the first set of openings 340 may include a first opening 341 corresponding to the first antenna element 221, a second opening 342 corresponding to the second antenna element 222, a third opening 343 corresponding to the third antenna element 223, a fourth opening 344 corresponding to the fourth antenna element 224, and a fifth opening 345 corresponding to the fifth antenna element 225. A gap between the openings of the first set of openings 340 may substantially correspond to a gap between the plurality of antennas 220. According to an embodiment, the first set of openings 340 may include slits. For example, at least one of the first opening 341, the second opening 342, the third opening 343, the fourth opening 344, and the fifth opening 345 may correspond to a slit.

According to an embodiment, when the antenna module 200 is accommodated in the bracket 300, each opening of the first set of openings 340 may be formed at a position in which a corresponding antenna from among the plurality of antennas 220 is disposed. For example, the first set of openings 340 may be aligned with the plurality of antennas 220, respectively. For example, each opening in the first set of openings 340 may be aligned with an antenna of the plurality of antennas 220. For example, the openings and antennas may be aligned with respect to an axis (e.g. z-axis) perpendicular to the direction.

For example, the first opening 341 corresponding to the first antenna element 221 from among the first set of openings 340 may be formed at a position corresponding to the first antenna element 221 within the second conductive portion 330. The second opening 342 corresponding to the second antenna element 222 from among the first set of openings 340 may be formed at a position corresponding to the second antenna element 222 within the second conductive portion 330. The third opening 343 corresponding to the third antenna element 223 from among the first set of openings 340 may be formed at a position corresponding to the third antenna element 223 within the second conductive portion 330. The fourth opening 344 corresponding to the fourth antenna element 224 from among the first set of openings 340 may be formed at a position corresponding to the fourth antenna element 224 in the second conductive portion 330. The fifth opening 345 corresponding to the fifth antenna element 225 from among the first set of openings 340 may be formed at a position corresponding to the fifth antenna element 225 in the second conductive portion 330.

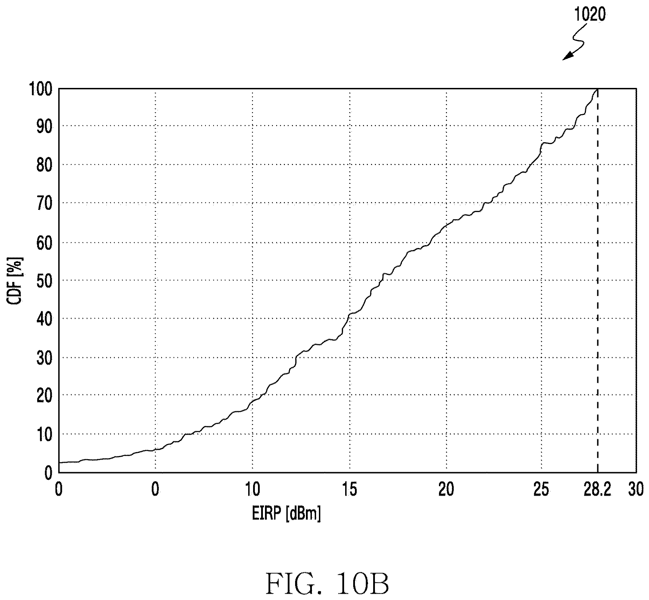

According to an embodiment, the first set of openings 340 may cause a change in a radiation pattern formed by electromagnetic waves by causing diffraction and/or reflection of electromagnetic waves from the plurality of antennas 220. The first set of openings 340 may be formed to cause a change in a radiation pattern in which a coverage by the beam is expanded. For example, when electromagnetic waves are radiated from the plurality of antennas 220, the radiation pattern concentrated in a direction may be changed by the reflection and/or diffraction of the electromagnetic waves. The first set of openings 340 may be formed to expand the radiation pattern, thereby expanding the coverage of the antenna module 200. As the coverage of the antenna module 200 is expanded, the communication performance of the electronic device 101 in a millimeter wave frequency band may be improved. An effect of improving the communication performance by the first set of openings 340 will be described later with reference to [Table 1] and FIG. 10B.

According to an embodiment, the electronic device 101 may include a conductive structure 350. For example, the conductive structure 350 may be spaced apart from the second conductive portion 330 in a second direction, wherein the second direction is perpendicular to a side (e.g. third/lower) surface connecting the first surface 211 and the second surface 212 of the printed circuit board 210. For example, the conductive structure 350 may be spaced apart downward (e.g., in -z direction) from the second conductive portion 330. According to an embodiment, the conductive structure 350 may be a component independent of the bracket 300, or may be integrally formed with the bracket 300 as a portion of the bracket 300. For example, when the conductive structure 350 is a separate component from the bracket 300, the conductive structure 350 may be disposed below the bracket 300 (e.g., in -z direction). For example, the conductive structure 350 may be a conductive plate. For example, when the conductive structure 350 is integrally formed with the bracket 300 as a portion of the bracket 300, the conductive structure 350 may extend in a direction (e.g., +x direction) perpendicular to the first conductive portion 310 below a contact point between the second conductive portion 330 and the first conductive portion 310.

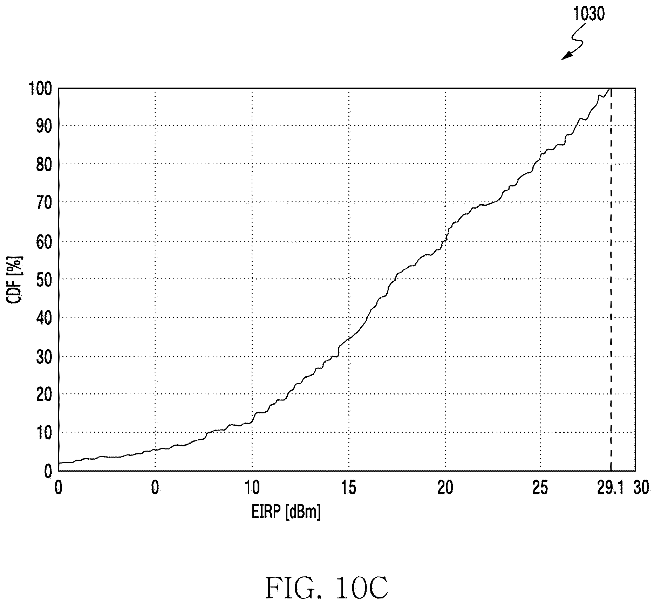

According to an embodiment, the conductive structure 350 may include a second set of openings 360. Each opening may be formed through the conductive structure 350, i.e. each opening may go all the way through the conductive structure 350 from one side to the other. That is, each opening may have an entrance on one surface of the conductive structure 350 and may penetrate through the entire thickness of the conductive structure 350 to an exit on the opposite side of the conductive structure 350. The second set of openings 360 may form a double slit for causing reflection and/or diffraction of electromagnetic waves from the plurality of antennas 220 together with the first set of openings 340 disposed within the second conductive portion 330. The second set of openings 360 may operate as a double slit with the first set of openings 340, and amplify a radiation area by causing constructive interference by diffraction. The effect of improving communication performance by the first set of openings 340 and the second set of openings 360 will be described later with reference to [Table 1] and FIG. 10C.

According to an embodiment, the second set of openings 360 may correspond to the first set of openings 340, respectively. For example, when the antenna module 200 includes five antennas 220 with a 1×5 arrangement, the first set of openings 340 may include five openings corresponding to each of the five antennas 220, and the second set of openings 360 may include five openings corresponding to each of five openings of the first set of openings 340. For example, the first set of openings 340 may have the same number of openings as the second set of openings 360, and for each opening in the first set of openings 340, there may be a corresponding opening in the second set of openings 360. For example, the second set of openings 360 may include a sixth opening 361 corresponding to the first opening 341, a seventh opening 362 corresponding to the second opening 342, an eighth opening 363 corresponding to the third opening 343, a ninth opening 364 corresponding to the fourth opening 344, and a tenth opening 365 corresponding to the fifth opening 345.

According to an embodiment, the second set of openings 360 may be formed respectively at a position corresponding to a corresponding opening among the first set of openings 340 within the conductive structure 350. For example, the second set of openings 360 may be aligned with the first set of openings 340. For example, each of the openings in the first set of openings 340 may be aligned with an opening in the second set of openings 360. For example, the openings may be aligned with respect to an axis (e.g. z-axis) perpendicular to the direction.

For example, the sixth opening 361 corresponding to the first opening 341 among the first set of openings 340 may be formed at a position facing the first opening 341 within the conductive structure 350. The seventh opening 362 corresponding to the second opening 342 among the first set of openings 340 may be formed at a position facing the second opening 342 within the conductive structure 350. The eighth opening 363 corresponding to the third opening 343 among the first set of openings 340 may be formed at a position facing the third opening 343 within the conductive structure 350. The ninth opening 364 corresponding to the fourth opening 344 among the first set of openings 340 may be formed at a position facing the fourth opening 345 within the conductive structure 350. The tenth opening 365 corresponding to the fifth opening 345 among the first set of openings 340 may be formed at a position facing the fifth opening 345 within the conductive structure 350.

According to an embodiment, each opening (or at least a portion of each opening) of the first set of openings 340 may be disposed between a corresponding antenna among the plurality of antennas 220 and a corresponding opening of the second set of openings 360. For example, the first opening 341 may be disposed between the first antenna element 221 and the sixth opening 361. The second opening 342 may be disposed between the second antenna element 222 and the seventh opening 362. The third opening 343 may be disposed between the third antenna element 223 and the eighth opening 363. The fourth opening 344 may be disposed between the fourth antenna element 224 and the ninth opening 364. The fifth opening 345 may be disposed between the fifth antenna element 225 and the tenth opening 365.

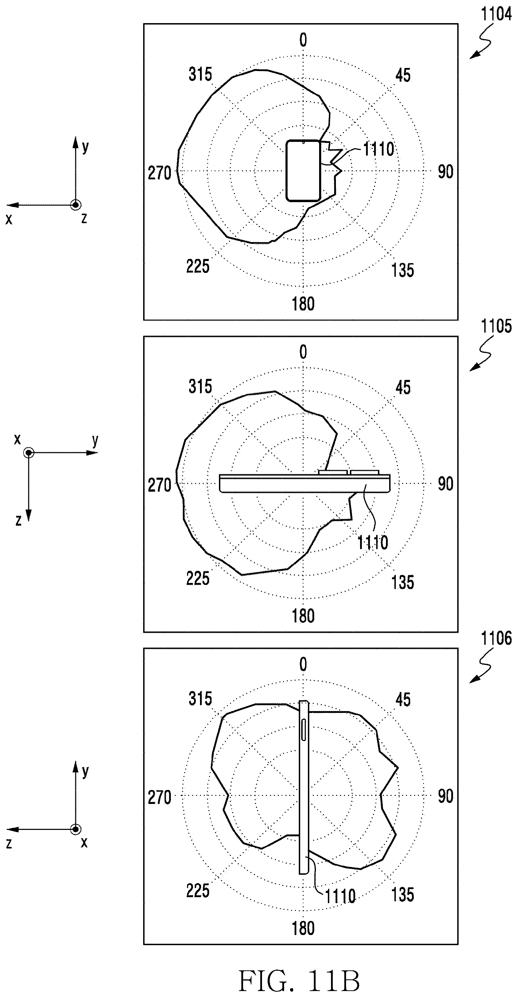

According to an embodiment, together with the first set of openings 340, the second set of openings 360 may cause a change in a radiation pattern formed by electromagnetic waves by causing diffraction and/or reflection of electromagnetic waves from the plurality of antennas 220. For example, the first set of openings 340 and the second set of openings 360 may be formed to cause a change in the radiation pattern in which the coverage by the beam is extended, through constructive interference of electromagnetic waves. For example, when electromagnetic waves are radiated from the plurality of antennas 220, a radiation pattern concentrated in a direction (e.g., +x direction) may be changed by the reflection and/or diffraction of the electromagnetic waves. The first set of openings 340 and the second set of openings 360 may be formed to expand the radiation pattern, thereby expanding the coverage of the antenna module 200. As the coverage of the antenna module 200 is expanded, the communication performance of the electronic device 101 in the millimeter wave frequency band may be improved. The effect of improving communication performance by the first set of openings 340 and the second set of openings 360 will be described later with reference to FIG. 10C and FIG. 11B.

According to an embodiment, a gap between the second conductive portion 330 and the conductive structure 350 may be based on an operating frequency of a signal transmitted and/or received through the antenna module 200. A gap 602 between the second conductive portion 330 and the conductive structure 350 may correspond to a gap between the first set of openings 340 and the second set of openings 360 forming a double slit. For example, when a gap between the first opening 341 and the sixth opening 361 corresponds to 1/2n of a wavelength corresponding to a frequency of a signal transmitted and/or received through the first antenna element 221 when the first antenna element 221 operates, the effect through the double slit may be enhanced.

For example, the antenna module 200 may be configured to transmit and/or receive a signal having a designated operating frequency. In this case, the gap 602 between the second conductive portion 330 and the conductive structure 350 may be 1/4 to 1/8 of a wavelength corresponding to the designated operating frequency. For example, in case that an operating frequency transmitted and/or received through the antenna module 200 is 28GHz in the n261 band defined in the 3GPP standard, the wavelength may be about 10.7 mm, and the gap 602 may be about 1.3 mm to 2.7 mm, but the numerical range is exemplary, and embodiments of the present disclosure are not limited thereto. Since the gap 602 between the second conductive portion 330 and the conductive structure 350 affects a thickness of a housing (e.g., the housing 500 of FIG. 2) of the electronic device 101, the gap 602 may be 1/8 of the wavelength corresponding to the designated operating frequency in order to reduce the thickness of the housing 500.

Referring to FIG. 6B, each of the first set of openings 340 formed in the second conductive portion 330 may include a first portion 711 and a second portion 712. The first portion 711 and the second portion 712 may cross each other. For example, the opening formed by the first portion 711 and the second portion 712 may have a cross-shape. For example, the opening formed by the first portion 711 and the second portion 712 may have a cross-shape for cross-polarization.

For example, the first portion 711 may be parallel to the direction (e.g., +x direction or direction of a side wall toward which the plurality of antennas 220 are directed). The second portion 712 crossing the first portion 711 may be perpendicular to the direction (e.g. the direction of the side wall).

For example, the second conductive portion 330 may extend in a direction (e.g., in the y-axis direction) in which the plurality of antennas 220 are arranged. As illustrated in FIG. 6B, the first portion 711 may be substantially parallel to an extension direction (e.g., the y-axis direction) of the second conductive portion 330, and the second portion 712 may be substantially perpendicular to the extension direction of the second conductive portion 330. The second portion 712 may cross the first portion 711 substantially perpendicularly, but is not limited thereto. For example, each opening of the first set of openings 340 may have a '+' shape.

According to an embodiment, a first length L1 of the first portion 711 and a second length L2 of the second portion 712 may be substantially the same. According to an embodiment, the first length L1 and the second length L2 may be set based on a wavelength corresponding to an operating frequency of a signal transmitted and/or received through the antenna module 200. The first length L1 and the second length L2 may be about 1/4 to about 1/2 of the wavelength corresponding to the operating frequency. For example, when the wavelength corresponding to the operating frequency of the signal is L, the first length L1 and the second length L2 may be about L/4, but is not limited thereto. The first length L1 and the second length L2 may effectively enhance a coverage expansion effect by constructive interference in a state that the impedance of a feeding point of the antenna module 200 is the lowest. When the first length L1 and the second length L2 are formed as about L/4, as the impedance is formed as about 50 ohms, the coverage expansion effect may be enhanced.

According to an embodiment, each opening of the first set of openings 340 may have a first width W1. The first width W1 may be set based on a second width W2, which is a width of each antenna of the plurality of antennas 220. Here, the width may be referred to as a length in the y-axis direction. When the antenna module 200 is a mmWave module, a frequency band supported by the antenna module 200 may be in a range of about 28 GHz to about 40 GHz, and in this case, the first length L1 and the second length L2 may be about 1.6 mm to about 2.5 mm. A size of each of the plurality of antennas 220 may be in a range of about 3 mm to about 4 mm. Even when the first length L1 and the second length L2 for each opening of the first set of openings 340 are at a maximum (e.g., about 2.5 mm), the first width W1 may be set to about 2/3 to about 3/4 of the second width W2 such that the first length L1 and the second length L2 may be included within the first width W1. For example, when the second width W2 is A, the first width W1 may be about 2A/3, but is not limited thereto.

Referring to FIG. 6C, the first set of openings 340 may have a roughly '+' shape. For example, the second portion 712 may be disposed substantially perpendicular to the first portion 711. For example, the first portion 711 and the second portion 712 may be substantially parallel to an extension direction (e.g., y-axis direction) of the second conductive portion 330. Since the first set of openings 340 may be formed by punching out a portion of the second conductive portion 330, when the first set of openings 340 has the roughly '+' shape, the punching process may be simply performed.

According to an embodiment, when the first set of openings 340 has the roughly '+' shape, the first width W1 of each of the first set of openings 340 may substantially correspond to the first length L1 and the second length L2. For example, when a target frequency band for improving a coverage is the n260 band (e.g., operating frequency of about 38 GHz) of the 3GPP standard, the first length L1 and the second length L2 may be about 1.9 mm.

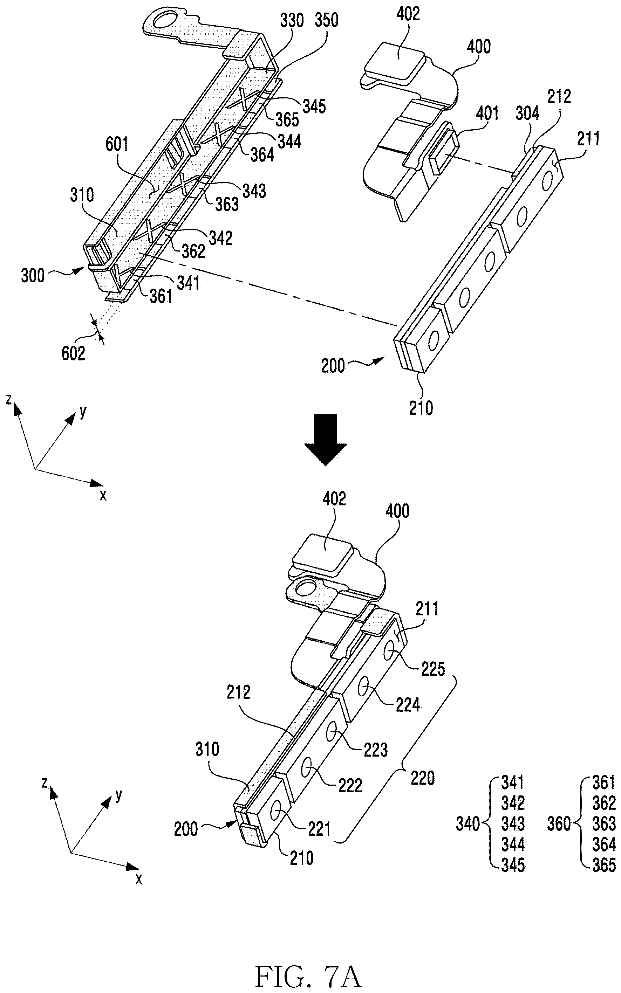

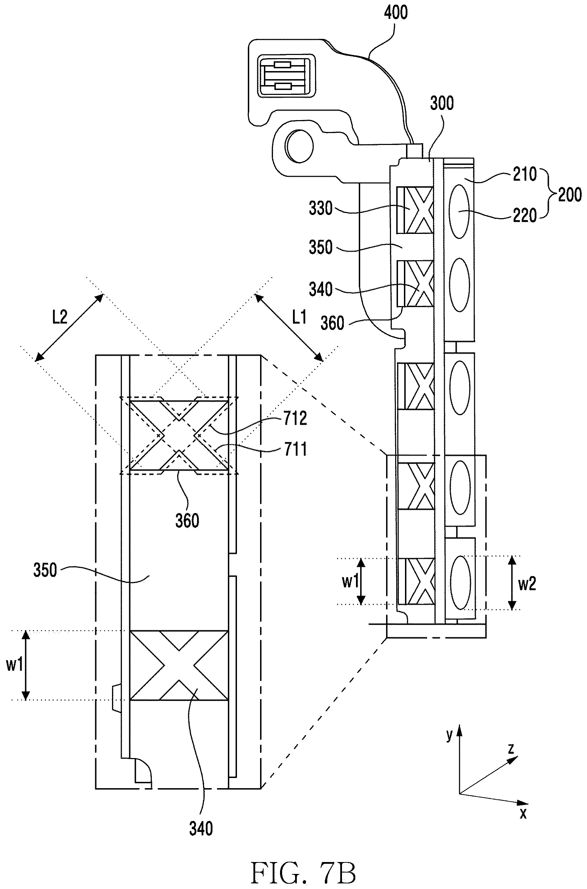

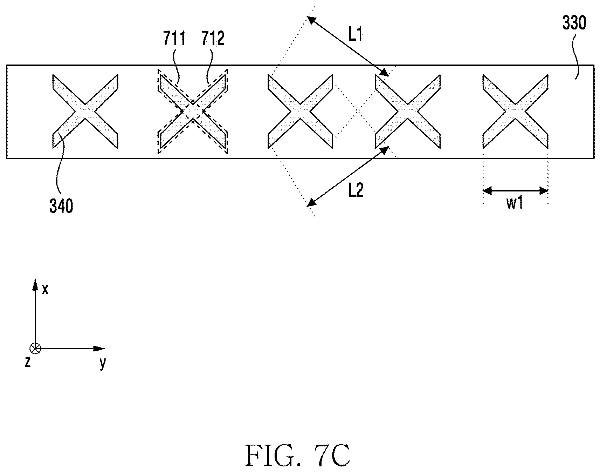

FIG. 7A illustrates an arrangement structure of an antenna module and a bracket according to an embodiment. FIG. 7B illustrates the antenna module and the bracket of FIG. 7A. FIG. 7C illustrates a first set of openings formed in a second conductive portion of the bracket of FIG. 7A.

Referring to FIG. 7A, a shape of a first set of openings 340 may be different from a shape of the first set of openings 340 illustrated in FIG. 6A. As described above, the first set of openings 340 may have a roughly '+' shape, but in this case, the extent of the second conductive portion 330 may be insufficient to form the first set of openings 340.

For example, when an operating frequency of the target frequency band of the antenna module 200 decreases, a first length (e.g., the first length L1 of FIG. 6C) and a second length (e.g., the second length L2 of FIG. 6C) based on the operating frequency may increase. As the first length L1 and the second length L2 increase, a relatively wide area of the second conductive portion 330 may be required to form the first set of openings 340 in a roughly '+' shape. For example, when the target frequency band for improving coverage is the n261 band (e.g., operating frequency of about 28 GHz) of the 3GPP standard, the first length L1 and the second length L2 may be about 2.5 mm. For example, when a length of the second conductive portion 330 in the x-axis direction is about 2.3 mm, and the first length L1 and the second length L2 are about 2.5 mm, the first portion 711 and the second portion 712 having a perpendicularly crossing shape may not be punched in the second conductive portion 330. Since the area of the second conductive portion 330 may be limited within a limited internal space of a housing (e.g., the housing 500 of FIG. 2), the first set of openings 340 may be formed in a form in which the first portion 711 and the second portion 712 are inclined to each other in order to improve space utilization.

Referring to FIG. 7B, the first set of openings 340 may have a roughly 'X' shape.

For example, the first portion 711 and the second portion 712 may be inclined with respect to the direction (e.g., +x direction or direction of a side wall toward which the plurality of antennas 220 face). For example, the first portion 711 and the second portion 712 may be substantially inclined with respect to an extension direction (e.g., y-axis direction) of the second conductive portion 330. Since the first set of openings 340 has a roughly 'X' shape even when the first length L1 and the second length L2 are formed relatively long, the space utilization of the second conductive portion 330 including the first set of openings 340 may be improved. Even without increasing the area of the second conductive portion 330, the first set of openings 340 having a roughly 'X' shape may be disposed within the second conductive portion 330. When the first set of openings 340 has a roughly 'X' shape, the space utilization may be improved.

Referring to FIG. 7C, for example, assuming that the second width W2 of each of the plurality of antennas 220 is 4 mm and a frequency band for improving coverage is the n261 band (e.g., operating frequency of about 28 GHz) of the 3GPP standard, the first length L1 and the second length L2 may be about 2.5 mm, and the first width W1 of each of the first set of openings 340 may be about 2.6 mm. As the first length L1 and the second length L2 of about 2.5 mm may be secured even when a length of the second conductive portion 330 in the x-axis direction is about 2.3 mm, the space utilization may be improved.

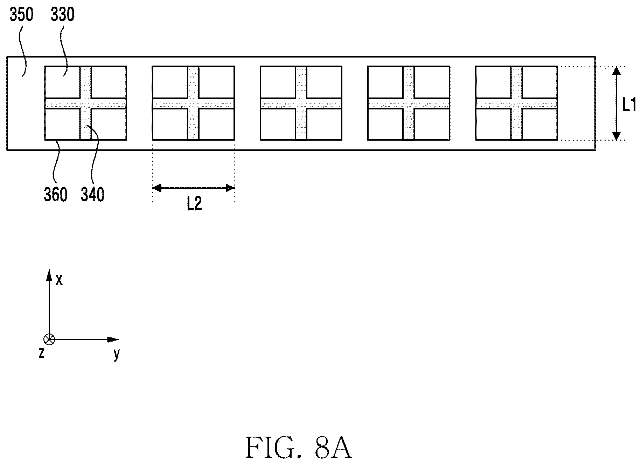

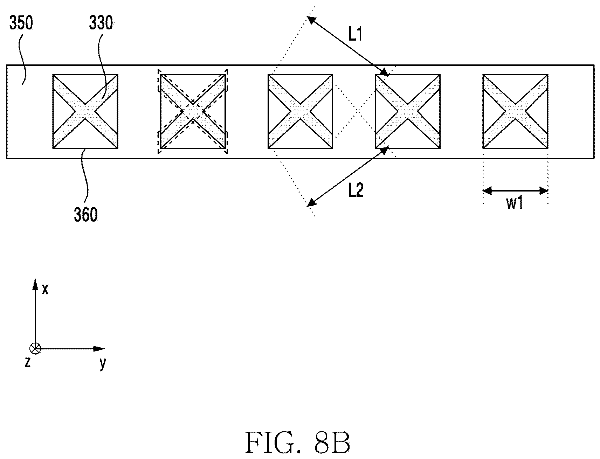

FIGS. 8A and 8B illustrate a conductive structure when viewed from below (i.e. when viewed in an orientation in which the conductive structure 350 is disposed between the second conductive portion 330 and the viewer), according to various embodiments.

Referring to FIG. 8a, since each opening of the second set of openings 360 is aligned with a corresponding opening of the first set of openings 340, when viewing the conductive structure 350 from below (e.g., when viewing the conductive structure 350 in the +z direction), the second set of openings 360 may overlap the first set of openings 340, respectively. For example, each of the openings in the second set of openings 360 may partially or entirely overlap the corresponding opening in the first set of openings 340. The second set of openings 360 may have a size capable of including the first set of openings 340 to cause constructive interference by diffraction together with the first set of openings 340.

According to an embodiment, when viewing the conductive structure 350 from below, each of the second set of openings 360 may have a size such that each of the first set of openings 340 is included within each of the second set of openings 360. For example, as illustrated in FIG. 8A, when viewing the conductive structure 350 from below, each of the first set of openings 340 may be visible from the outside through each of the second set of openings 360 formed within the conductive structure 350. For example, when viewed through one of the openings in the second set of openings 360, the corresponding opening in the first set of openings 340 may be entirely visible. When the first set of openings 340 has a roughly '+' shape, the second set of openings 360 may have a quadrangle shape having sides corresponding to the first length L1 and sides corresponding to the second length L2.

Referring to FIG. 8B, even when the first set of openings 340 has a roughly 'X' shape, each of the second set of openings 360 may have a size such that each of the first set of openings 340 is included within each of the second set of openings 360. For example, when viewed through one of the openings in the second set of openings 360, the corresponding opening in the first set of openings 340 may be entirely visible. In a case that the first set of openings 340 has a roughly 'X' shape, the second set of openings 360 may have a quadrangle shape having a length corresponding to the first width W1 of the first set of openings 340.

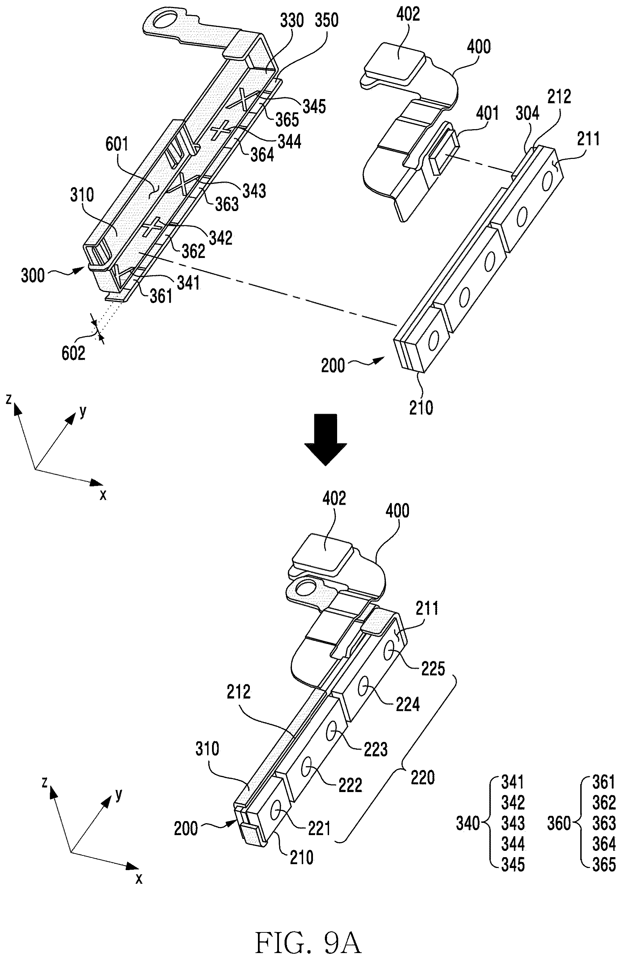

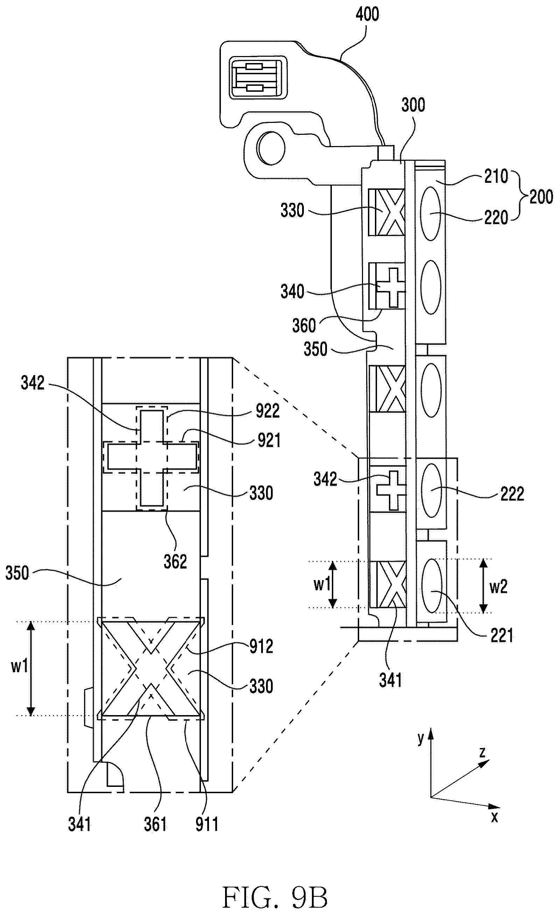

FIG. 9A illustrates an arrangement structure of an antenna module and a bracket according to an embodiment. FIG. 9B illustrates the antenna module and the bracket of FIG. 9A.

Referring to FIG. 9A, a shape of each of the first set of openings 340 may be independent. For example, if there are a plurality of target frequency bands for improving coverage, each of the first set of openings 340 may have different shapes in order to improve coverage for the plurality of frequency bands. For example, a portion of openings of the first set of openings 340 may have a roughly '+' shape, and remaining openings of the first set of openings 340 may have a roughly 'X' shape.

Referring to FIG. 9B, when the target frequency band is the n261 band (e.g., operating frequency of about 28 GHz) and the n260 band (e.g., operating frequency of about 38 GHz) of the 3GPP standard, the first set of openings 340 may include both one or more openings in a 'X' shape for the n261 band and one or more openings in a '+' shape for the n260 band.

For example, the first opening 341 corresponding to the first antenna element 221 may have a roughly 'X' shape, and the second opening 342 corresponding to the second antenna element 222 may have a roughly '+' shape. In this case, the first width W1 of each opening of the first set of openings 340 may be 2/3 to 3/4 of the second width W2 of each antenna of the antennas 220. A first portion 911 and a second portion 912 of the first opening 341 having a roughly 'X' shape may be inclined with respect to an extension direction (e.g., y-axis direction) of the second conductive portion 330. A first portion 921 of the second opening 342 having a roughly 'X' shape may be parallel to an extension direction of the second conductive portion 330, and a second portion 922 of the second opening 342 may be perpendicular to the extension direction of the second conductive portion 330. Even when shapes of the first set of openings 340 are different from each other, each opening of the second set of openings 360 may have a size capable of including a corresponding opening among the first set of openings 340.

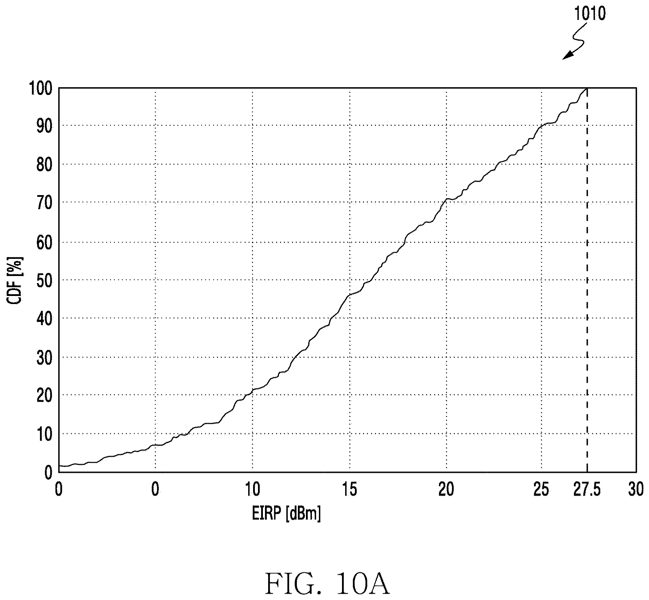

FIG. 10A is a CDF-EIRP graph of an electronic device according to a comparative example including a bracket without openings. FIG. 10B is a CDF-EIRP graph of an electronic device according to a comparative example including a bracket comprising only a first set of openings. FIG. 10C is a CDF-EIRP graph of an electronic device according to an embodiment including a bracket comprising a first set of openings and a second set of openings.

The cumulative distribution function (CDF)-effective isotropic radiated power (EIRP) is a probability distribution that expresses the EIRP of the antenna module 200 as a cumulative distribution. The following [Table 1] illustrates the CDF for the EIRP of the electronic device 101 according to an embodiment and electronic devices according to a comparative example in the n261 band (e.g., operating frequency of about 28 GHz) of the 3GPP standard. The electronic device 101 according to an embodiment and the electronic devices according to a comparative example include the same antenna module 200. A bracket 300 of the electronic device 101 according to an embodiment includes a second conductive portion 330 including a first set of openings 340 and a conductive structure 350 including a second set of openings 360. A bracket 300 of an electronic device according to a first comparative example includes only the second conductive portion 330 including the first set of openings 340. A bracket 300 of an electronic device according to a second comparative example does not include openings within the second conductive portion 330.

**[Table 1]**

| Category | CDF-EIRP(dBm) | | |
|---|---|---|---|
| | CDF 20% | CDF 50% | CDF 100% |
| Electronic device according to an embodiment | 11.9 | 17.5 | 29.1 |
| Electronic device according to a first comparative example | 10.7 | 16.8 | 28.2 |
| Electronic device according to a second comparative example | 9.8 | 16.2 | 27.5 |

Referring to the above [Table 1], it may be confirmed that the EIPR values for CDF 20%, CDF 50%, and CDF 100% of the electronic device 101 according to an embodiment are the highest for the signal of the n261 band. The reflection and/or diffraction of electromagnetic waves from the plurality of antennas 220 may be caused by the first set of openings 340 and the second set of openings 360, which operate as double slits, thereby improving the communication performance of the electronic device 101 by constructive interference of the electromagnetic waves due to the reflection and/or diffraction. The electronic device 101 according to an embodiment may have improved communication performance compared to the electronic device according to the first comparative example and the electronic device according to the second comparative example. The electronic device according to the first comparative example, which includes only a single slit (e.g., the first set of openings 340), may have lower communication performance than the electronic device 101 according to an embodiment, but may have higher communication performance than the electronic device according to the second comparative example, which does not include openings.

FIG. 10A is a CDF-EIRP graph of an electronic device according to a second comparative example. FIG. 10B is a CDF-EIRP graph of an electronic device according to a first comparative example. FIG. 10C is a CDF-EIRP graph of the electronic device 101 according to an embodiment.

The CDF-EIRP graph indicates a probability of exceeding a specific EIRP value. When a probability of having a high EIRP value is high, it indicates that a corresponding antenna module 200 may cover a wider range.

In the first graph 1010 of FIG. 10A, the ERIP value corresponding to CDF 20% is about 9.8 dBm, the ERIP value corresponding to CDF 50% is about 16.2 dBm, and the ERIP value corresponding to CDF 80% is about 22.7 dBm. The maximum ERIP value corresponding to CDF 100% is about 27.5 dBm.

In the second graph 1020 of FIG. 10B, the ERIP value corresponding to CDF 20% is about 10.7 dBm, the ERIP value corresponding to CDF 50% is about 16.8 dBm, and the ERIP value corresponding to CDF 80% is about 24.4 dBm. The maximum ERIP value corresponding to CDF 100% is about 28.2 dBm.

In the third graph 1030 of FIG. 10C, the ERIP value corresponding to CDF 20% is about 11.91 dBm, the ERIP value corresponding to CDF 50% is about 17.5 dBm, and the ERIP value corresponding to CDF 80% is about 24.6 dBm. The maximum ERIP value corresponding to CDF 100% is about 29.1 dBm.

When comparing the EIPR values for the CDFs indicated by the first graph 1010, the second graph 1020, and the third graph 1030, the third graph 1030 indicates the highest gain, and the first graph 1010 indicates the lowest gain. Since the first graph 1010 indicates the communication performance of the electronic device according to the second comparative example including the bracket 300 that does not include openings, it may be confirmed that the communication performance of the electronic device according to the second comparative example is the lowest. Since the beam formed from the plurality of antennas 220 is concentrated in a specific direction, a coverage of the antenna module 200 of the electronic device according to the second comparative example is the narrowest.

Since the second graph 1020 indicates the communication performance of the electronic device according to the first comparative example including the bracket 300 that includes only the first set of openings 340, it may be confirmed that the communication performance of the electronic device according to the first comparative example is higher than that of the electronic device according to the second comparative example, and lower than that of the electronic device 101 according to an embodiment. Since the electromagnetic waves from the plurality of antennas 220 are reflected and/or diffracted through the first set of openings 340, the coverage of the antenna module 200 of the electronic device according to the first comparative example is wider than the coverage of the antenna module 200 of the electronic device according to the second comparative example, but narrower than the coverage of the antenna module 200 of the electronic device 101 according to an embodiment.

Since the third graph 1030 indicates the communication performance of the electronic device 101 according to an embodiment including the bracket 300, which includes both the first set of openings 340 and the second set of openings 360, it may be confirmed that the communication performance of the electronic device 101 according to an embodiment is the highest. Since the electromagnetic waves from the plurality of antennas 220 are reflected and/or diffracted through the first set of openings 340 and the second set of openings 360, which form a double slit, the radiation area may be amplified by occurring constructive interference. The coverage of the antenna module 200 of the electronic device 101 according to an embodiment is the widest.

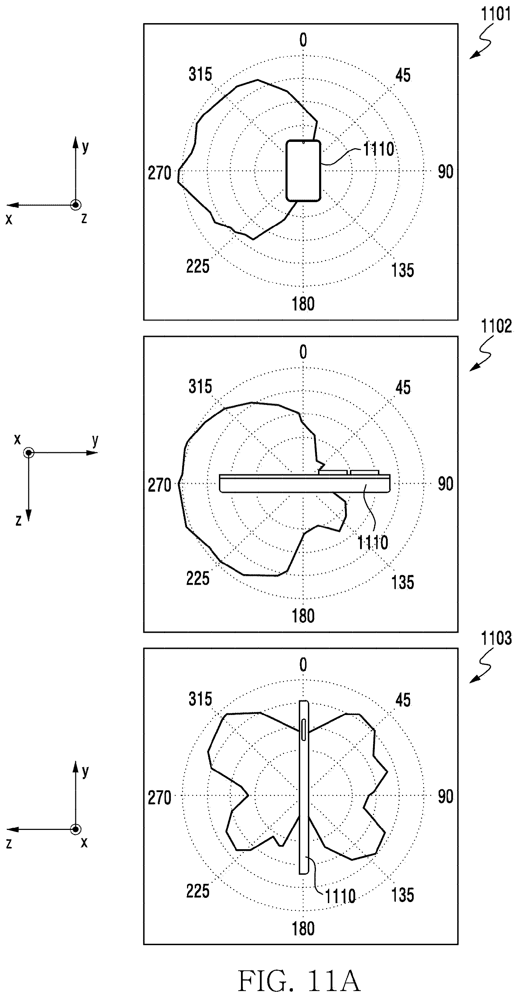

FIG. 11A illustrates a radiation pattern formed around an electronic device according to a comparative example including a bracket comprising only a first set of openings. FIG. 11B illustrates a radiation pattern formed around an electronic device according to an embodiment including a bracket comprising a first set of openings and a second set of openings.

FIGS. 11A and 11B illustrate radiation patterns of an antenna module for the 28 GHz operating frequency of the n261 band.

Referring to FIG. 11A, a radiation pattern may be formed around an electronic device according to a comparative example by the antenna module 200. The radiation patterns illustrated in FIG. 11A indicate radiation patterns according to a posture of an electronic device according to a comparative example, which includes the bracket 300 including only the first set of openings 340. 1101 of FIG. 11A illustrates a radiation pattern formed by the antenna module 200 based on a front surface of the electronic device 101. 1102 of FIG. 11A illustrates a radiation pattern formed by the antenna module 200 based on an upper surface of the electronic device 101. 1103 of FIG. 11B illustrates a radiation pattern formed by the antenna module 200 based on a sidewall of the electronic device 101.

The radiation patterns illustrated in FIG. 11B indicate radiation patterns according to a posture of the electronic device 101 according to an embodiment, which includes the bracket 300 including both the first set of openings 340 and the second set of openings 360. 1104 of FIG. 11B illustrates a radiation pattern formed by the antenna module 200 based on the front surface of the electronic device 101. 1105 of FIG. 11B illustrates a radiation pattern formed by the antenna module 200 based on the upper surface of the electronic device 101. 1106 of FIG. 11B illustrates a radiation pattern formed by the antenna module 200 based on the sidewall of the electronic device 101.

Comparing the radiation patterns illustrated in FIGS. 11A and 11B, the radiation pattern formed from the antenna module 200 of the electronic device 101 according to an embodiment may have a larger area and a stronger intensity than the radiation pattern formed from the antenna module 200 of the electronic device according to a comparative example. Referring to FIG. 11B, the plurality of antennas 220 may form a strong beam in a front direction (e.g., +z direction and - z direction of 1106) of the electronic device 101, in addition to a direction (e.g., +x direction of 1104) with respect to the side wall of the electronic device 101. As the electromagnetic waves from the plurality of antennas 220 are reflected and/or diffracted by the bracket 300 including the first set of openings 340 and the second set of openings 360, a coverage of the beam may be extended in other directions different from the direction.

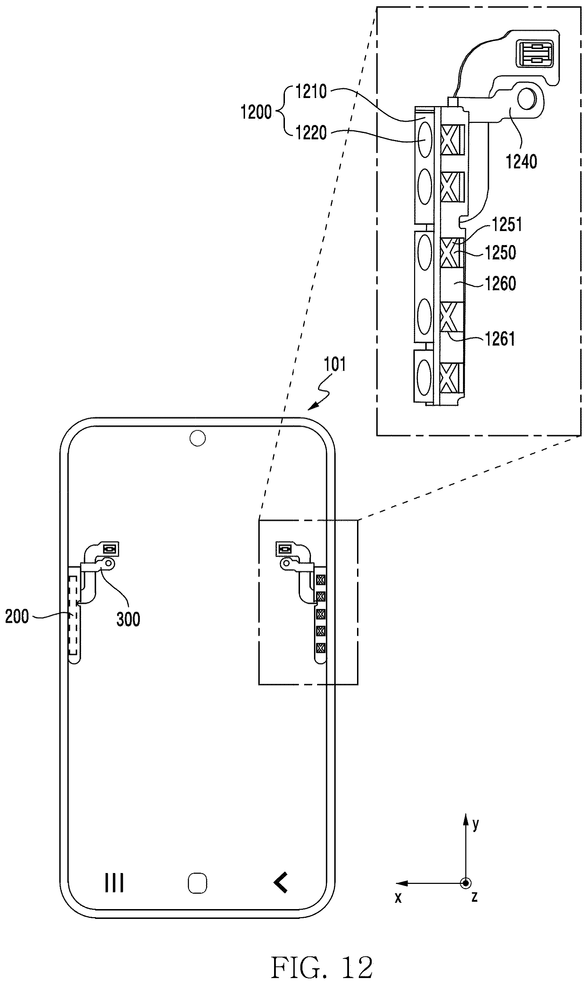

FIG. 12 is a front view of an electronic device according to an embodiment.

Referring to FIG. 12, an electronic device 101 according to an embodiment may include a plurality of antenna modules. For example, the electronic device 101 may include the above-described antenna module 200 and another antenna module 1200. The antenna module 200 may be referred to as the antenna module 200 illustrated in FIGS. 3A to 3C. The other antenna module 1200 may be disposed at a position different from that of the antenna module 200 in the housing 500. The other antenna module 1200 may be disposed in a direction different from that of the antenna module 200. For example, the antenna module 200 may be disposed to face a direction (e.g., +x direction), and the other antenna module 1200 may be disposed to face another direction different from the direction.

According to an embodiment, the other antenna module 1200 may be substantially the same as the antenna module 200 except for an arrangement structure. For example, the other antenna module 1200 may include another substrate 1210 and a plurality of other antennas 1220. The other substrate 1210 may include a third surface facing another direction different from the direction and a fourth surface opposite to the third surface. The plurality of other antennas 1220 may be disposed on the third surface of the other substrate 1210. The above-described descriptions of the antenna module 200 may be applied to the other antenna module 1200 in substantially the same manner, and overlapping descriptions are omitted.

According to an embodiment, the electronic device 101 may include another bracket 1240 for supporting the other antenna module 1200. The other bracket 1240 may be substantially the same as the bracket 300 described above. The other bracket 1240 may include a second conductive portion 1250 including a first set of openings 1251 and a conductive structure 1260 including a second set of openings 1261. The above-described descriptions of the bracket 300 may be applied to the other bracket 1240 in substantially the same manner, and overlapping descriptions are omitted.

According to an embodiment, the antenna module 200 may be disposed to face a direction (e.g., +x direction) of the side wall of the electronic device 101. The other antenna module 1200 may be disposed to face another direction different from the direction. For example, the other antenna module 1200 may be disposed to face a rear side (e.g., -z direction) of the electronic device 101, but is not limited thereto. For example, the other antenna module 1200 may be disposed to face a front side (e.g., +z direction) of the electronic device 101. For example, the antenna module 200 may be disposed parallel to the y-axis, and the other antenna module 1200 may be disposed parallel to the x-axis. In addition, various arrangement structures may be possible.

The electronic device 101 according to an embodiment may be configured to communicate with an external electronic device using the antenna module 200 and the other antenna module 1200. Since the antenna module 200 and the other antenna module 1200 are disposed in different directions, the radiation pattern formed around the electronic device 101 may be expanded and beams may be formed in different directions, thereby improving communication performance of the electronic device 101.

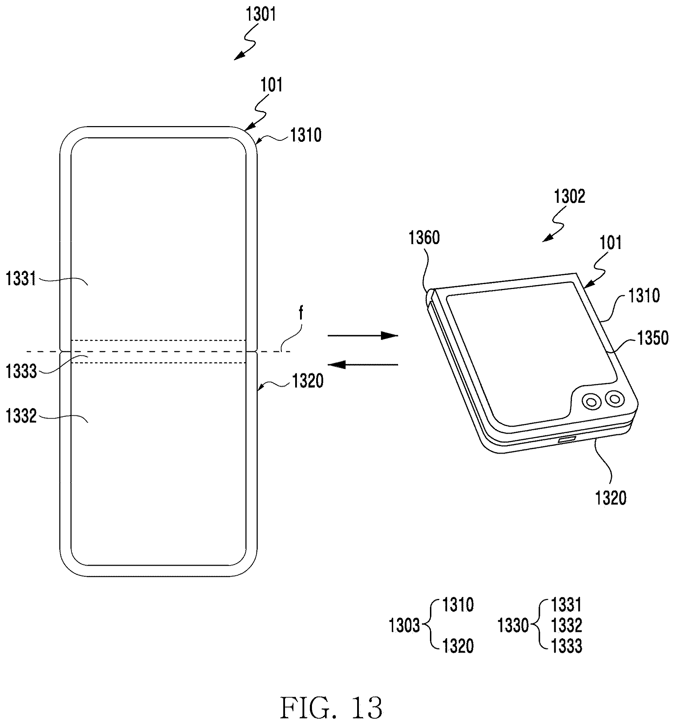

FIG. 13 illustrates an electronic device according to an embodiment.

In the drawings for explaining the electronic device 101 described above, the electronic device 101 is illustrated as a bar-type device, but a structure of the electronic device 101 is not limited thereto. For example, the electronic device 101 may be implemented as a foldable device.

An electronic device 101 to be described later may be substantially the same as the above-described electronic device 101 except for a foldable structure. The same components as the above-described components may be given the same reference numerals, and overlapping descriptions may be omitted.

Referring to FIG. 13, the electronic device 101 according to an embodiment may include a foldable housing 1303. The foldable housing 1303 may include a first housing part 1310 and a second housing part 1320. The first housing part 1310 and the second housing part 1320 may be rotatably coupled by a hinge assembly 1360. For example, the first housing part 1310 may be rotatable with respect to the second housing part 1320 based on the folding axis f. For example, the electronic device 101 may be configured to provide a folded state 1301 in which the first housing part 1310 and the second housing part 1320 are folded, an unfolded state 1302 in which the first housing part 1310 and the second housing part 1320 are unfolded, and a plurality of intermediate states between the folded state 1301 and the unfolded state 1302.

The electronic device 101 according to an embodiment may include a flexible display 1330. The flexible display 1330 may include a first display area 1331, a second display area 1332, and a third display area 1333. The first display area 1331 may be supported by the first housing part 1310. The second display area 1332 may be supported by the second housing part 1320. The third display area 1333 may be disposed between the first display area 1331 and the second display area 1332. The third display area 1333 may be bent at least partially based on rotation of the first housing part 1310 or the second housing part 1320. According to an embodiment, the electronic device 101 may include a cover display 1350 visible from the outside in the unfolded state 1302.

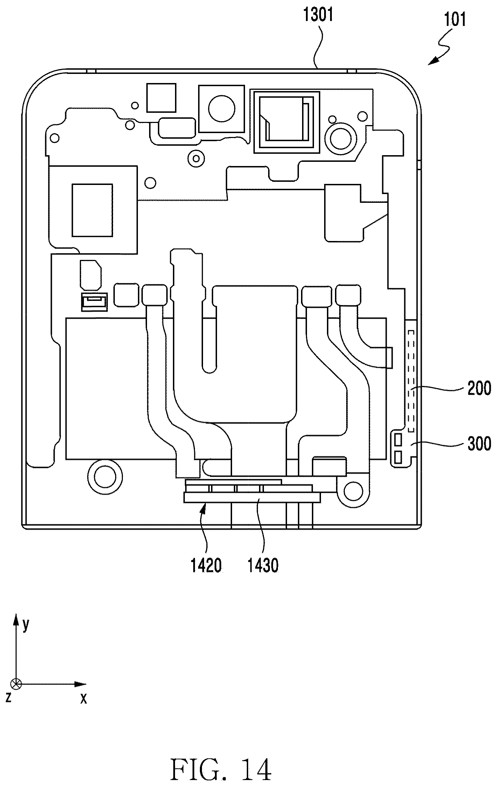

FIG. 14 illustrates a portion of the electronic device of FIG. 13.

According to an embodiment, the electronic device 101 may include one or more antenna modules 200. For example, the electronic device 101 may include the antenna module 200 and another antenna module 1410. For example, the antenna module 200 and the other antenna module 1410 may be disposed in the first housing part 1310, but are not limited thereto. For example, the antenna module 200 and the other antenna module 1410 may be disposed in the second housing part 1320. For example, the antenna module 200 may be disposed within the first housing part 1310, and the other antenna module 1410 may be disposed within a second housing part (e.g., a second housing part 1320 of FIG. 13).

According to an embodiment, the antenna module 200 and the other antenna module 1410 may include an mmWave module. The antenna module 200 and the other antenna module 1410 may be disposed at different positions within the foldable housing 1303. The antenna module 200 and the other antenna module 1410 may be disposed in different directions. For example, the antenna module 200 may be disposed to face a side (e.g., in +x direction) of a side wall of the foldable housing 1303, and the other antenna module 1410 may be disposed to face the an upper portion (e.g., in +y direction) of the foldable housing 1303, but is not limited thereto. The antenna module 200 and the other antenna module 1410 may be substantially the same as the antenna module 200 described above.

The electronic device 101 according to an embodiment may include a bracket 300 for the antenna module 200 and another bracket 1420 for the other antenna module 1410. The bracket 300 and the other bracket 1420 may be substantially the same as the bracket 300 described above.

An electronic device 101 is provided. The electronic device 101 may comprise an antenna module 200 comprising a printed circuit board (PCB) 210 and a plurality of antennas 220 disposed on the PCB 210 to face a direction of a side wall of the electronic device 101. The electronic device 101 may comprise a bracket 300 accommodating the antenna module 200, the bracket including a first conductive portion 310 disposed behind the PCB 210 of the antenna module 200, and a second conductive portion 330, extending perpendicularly from the first conductive portion 310, the second conductive portion 330 including a first set of openings 340. The electronic device 101 may comprise a conductive structure 350 spaced apart from the second conductive portion 330, the conductive structure 350 including a second set of openings 360. Each opening in the first set of openings 340 may be disposed between each of antenna of the plurality of antennas 220 and each opening in the second set of openings 360.

According to an embodiment, the first set of openings 340 may include slits.

According to an embodiment, the conductive structure 350, extending perpendicularly from the first conductive portion 310, may be integrally formed with the bracket 300.

According to an embodiment, each opening in the first set of openings 340 may have cross-shape for cross polarization.

According to an embodiment, each opening in the first set of openings 340 may include a first portion 711 and a second portion 712 crossing the first portion 711. The first portion 711 may be parallel to the direction of the side wall of the electronic device 101. The second portion 712 may be perpendicular to the direction of the side wall of the electronic device 101.

According to an embodiment, each opening in the first set of openings 340 may include a first portion 711 and a second portion 712 crossing the first portion 711. The first portion 711 and the second portion 712 may be inclined with respect to the direction of the side wall of the electronic device 101.

According to an embodiment, the antenna module 200 may be configured to transmit or receive signals with designated operating frequency. A first length of the first portion 711 and a second length of the second portion 712 substantially may correspond to 1/4 of a wavelength corresponding to the designated operating frequency.

According to an embodiment, when viewing the conductive structure 350 from below, each opening in the second set of openings 360 may have a size such that each opening in the first set of openings 340 is included within the corresponding opening in the second set of openings 360.

According to an embodiment, the antenna module 200 may be configured to transmit or receive signals with designated operating frequency. A gap between the second conductive portion 330 and the conductive structure 350 may correspond to 1/8 of a wavelength corresponding to the designated operating frequency.

According to an embodiment, the electronic device 101 may further comprise a housing 500 that includes a peripheral part 510 defining at least portion of the side wall of the electronic device 101, and a supporting part 520, surrounded by the peripheral part 510, supporting one or more electronic components of the electronic device 101. The antenna module 200 may be disposed in the housing 500 such that the plurality of antennas 220 disposed on the PCB 210 faces the direction of the side wall.

According to an embodiment, the electronic device 101 may further comprise another antenna module 200, disposed in the housing 500, comprising antennas facing another direction different from the direction of the side wall of the electronic device 101. The electronic device 101 may further comprise another bracket 300 accommodating the other antenna module 200.

According to an embodiment, the other direction may correspond to a front side of the electronic device 101 or a rear side of the electronic device 101.

According to an embodiment, the bracket 300 may include a through hole 370 through which a fastener coupled to the supporting part 520 passes. The bracket 300 may be fastened to the supporting part 520 through the fastener.

According to an embodiment, the first set of openings 340 and the second set of openings 360 may be configured to expand a coverage of the antenna module 200 in other directions distinct from the direction by causing diffraction or reflection of electromagnetic waves from the plurality of antennas 220.

According to an embodiment, the electronic device 101 may further comprise a foldable housing 1303 including a first housing part 1310, and a second housing part 1320 rotatably coupled to the first housing part 1310. The antenna module 200 may be disposed in the first housing part 1310.

An electronic device 101 is provided. The electronic device 101 may comprise an antenna module 200 including a printed circuit board (PCB) 210 and a plurality of antennas 220 disposed on the PCB 210 to face a direction of a side wall of the electronic device. The electronic device 101 may comprise a bracket 300 accommodating the antenna module 200, the bracket comprising a first conductive portion 310 disposed behind the PCB 210 of the antenna module 200, a second conductive portion 330, extending perpendicularly from the first conductive portion 310, the second conductive portion 330 including a first set of openings 340 formed therethrough, and a conductive structure 350 spaced apart from the second conductive portion 330, the conductive structure 350 including a second set of openings 360 formed therethrough. Each opening in the first set of openings 340 may be disposed between each of antenna of the plurality of antennas 220 and each opening in the second set of openings 360.

According to an embodiment, the first set of openings 340 may comprise slits.

According to an embodiment, the conductive structure 350 may extend perpendicularly from the first conductive portion 310.

According to an embodiment, each opening in the first set of openings 340 may have cross-shape for cross polarization.

According to an embodiment, each opening in the first set of openings 340 may comprise a first portion 711 and a second portion 712 crossing the first portion 711. A first length of the first portion 711 and a second length of the second portion 712 may correspond to 1/4 of a wavelength corresponding to the designated operating frequency.

According to an embodiment, each opening in the first set of openings may include a first portion and a second portion crossing the first portion, and the first portion and the second portion may be inclined with respect to the direction.

According to an embodiment, the antenna module may be configured to transmit or receive signals with designated operating frequency, and a first length of the first portion and a second length of the second portion may substantially correspond to 1/4 of a wavelength corresponding to the designated operating frequency.

According to an embodiment, when viewing the conductive structure from below, each opening in the second set of openings may be a size such that each opening in the first set of openings is visible through the corresponding opening in the second set of openings.

According to an embodiment, the antenna module may be configured to transmit or receive signals with designated operating frequency, and a gap between the second conductive portion and the conductive structure may substantially correspond to 1/8 of a wavelength corresponding to the designated operating frequency.

According to an embodiment the electronic device may further comprise a housing including: a peripheral part configured to define at least portion of the side wall of the electronic device, and a supporting part, surrounded by the peripheral part, configured to support one or more electronic components of the electronic device, and the antenna module may be disposed in the housing such that the plurality of antennas disposed on the PCB face in the direction.

According to an embodiment, the electronic device may further comprise: another antenna module, disposed in the housing, comprising antennas facing in another direction different from the direction; and another bracket accommodating the other antenna module.

According to an embodiment, the direction may correspond to a side wall of the electronic device; and the other direction may correspond to a front side of the electronic device or a rear side of the electronic device.

According to an embodiment, the bracket may include a through hole through which a fastener coupled to the supporting part passes, the bracket being fastened to the supporting part through the fastener.

According to an embodiment the first set of openings and the second set of openings may be configured to expand a coverage of the antenna module in other directions distinct from the direction by causing diffraction or reflection of electromagnetic waves from the plurality of antennas.

According to an embodiment, the electronic device may further comprise a foldable housing including: a first housing part, and a second housing part rotatably coupled to the first housing part, and the antenna module may be disposed in the first housing part.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

In a first example an electronic device is provided, the electronic device comprising: an antenna module comprising a PCB and a plurality of antennas disposed on the PCB to face in a direction; a bracket configured to accommodate the antenna module, the bracket including: a first conductive portion disposed behind, with respect to the direction, the PCB of the antenna module, and a second conductive portion, extending perpendicularly from the first conductive portion, the second conductive portion including a first set of openings formed therethrough; and a conductive structure spaced apart from the second conductive portion, the conductive structure including a second set of openings formed therethrough, wherein each opening in the first set of openings is disposed between an antenna of the plurality of antennas and an opening in the second set of openings.

In a second example there is provided the electronic device of the first example, wherein the first set of openings includes slits.

In a third example there is provided the electronic device of the first or second example, wherein the conductive structure, extending perpendicularly from the first conductive portion, is integrally formed with the bracket.

In a fourth example there is provided the electronic device of any one of the first to third examples, wherein each opening in the first set of openings has cross-shape for cross polarization.

In a fifth example there is provided the electronic device of the fourth example, wherein each opening in the first set of openings includes a first portion and a second portion crossing the first portion, wherein the first portion is parallel to the direction, and wherein the second portion is perpendicular to the direction.

In a sixth example there is provided the electronic device of the fourth example, wherein each opening in the first set of openings includes a first portion and a second portion crossing the first portion, and wherein the first portion and the second portion are inclined with respect to the direction.

In a seventh example there is provided the electronic device of the fifth example, wherein the antenna module is configured to transmit or receive signals with designated operating frequency, and wherein a first length of the first portion and a second length of the second portion substantially correspond to 1/4 of a wavelength corresponding to the designated operating frequency.

In an eighth example there is provided the electronic device of the fifth example, wherein, when viewing the conductive structure from below, each opening in the second set of openings has a size such that each opening in the first set of openings is visible through the corresponding opening in the second set of openings.

In a ninth example there is provided the electronic device of any one of the first to eighth examples, wherein the antenna module is configured to transmit or receive signals with designated operating frequency, and wherein a gap between the second conductive portion and the conductive structure substantially corresponds to 1/8 of a wavelength corresponding to the designated operating frequency.

In a tenth example there is provided the electronic device of any one of the first to ninth examples, further comprising a housing including: a peripheral part configured to define at least portion of the side wall of the electronic device, and a supporting part, surrounded by the peripheral part, configured to support one or more electronic components of the electronic device, and wherein the antenna module is disposed in the housing such that the plurality of antennas disposed on the PCB face in the direction.

In an eleventh example there is provided the electronic device of the tenth example, further comprising: another antenna module, disposed in the housing, comprising antennas facing in another direction different from the direction; and another bracket accommodating the other antenna module.

In a twelfth example there is provided the electronic device of the tenth example, wherein the direction corresponds to a direction the side wall of the electronic device; and wherein the other direction corresponds to a direction of a front side of the electronic device or a direction of a rear side of the electronic device.

In a thirteenth example there is provided the electronic device of any one of the first to twelfth examples, wherein the bracket includes a through hole through which a fastener coupled to the supporting part passes, the bracket being fastened to the supporting part through the fastener.

In a fourteenth example there is provided the electronic device of any one of the first to thirteenth examples, wherein the first set of openings and the second set of openings are configured to expand a coverage of the antenna module in other directions different from the direction by causing diffraction or reflection of electromagnetic waves from the plurality of antennas.

In a fifteenth example there is provided the electronic device of any one of the first to fourteenth examples, further comprising a foldable housing including: a first housing part, and a second housing part rotatably coupled to the first housing part, wherein the antenna module is disposed in the first housing part.

In a sixteenth example, there is provided an electronic device, the electronic device comprising: an antenna module comprising a PCB and a plurality of antennas disposed on a first surface of the PCB to face in a first direction perpendicular to the first surface; a bracket configured to accommodate the antenna module, the bracket including: a first conductive portion disposed to face a second surface of the PCB of the antenna module, wherein the second surface is opposite the first surface, and a second conductive portion, extending perpendicularly from the first conductive portion in the first direction and disposed to face a third surface of the PCB of the antenna module, wherein the third surface is disposed between the first surface and the second surface to connect the first surface and the second surface, the second conductive portion including a first set of openings formed through the second conductive portion in a second direction perpendicular to the third surface; and a conductive structure spaced apart from the second conductive portion in the second direction, the conductive structure including a second set of openings formed through the conductive structure in the second direction, wherein each opening in the first set of openings is disposed between an antenna of the plurality of antennas and an opening in the second set of openings.

In a seventeenth example, there is provided the electronic device of the sixteenth example, further comprising the features of any one of the second to fifteenth examples.

## Claims

1. An electronic device comprising:
an antenna module comprising a printed circuit board (PCB) and a plurality of antennas disposed on the PCB to face in a direction;
a bracket configured to accommodate the antenna module, the bracket including:
a first conductive portion disposed behind, with respect to the direction, the PCB of the antenna module, and
a second conductive portion, extending perpendicularly from the first conductive portion, the second conductive portion including a first set of openings formed therethrough; and
a conductive structure spaced apart from the second conductive portion, the conductive structure including a second set of openings formed therethrough,
wherein each opening in the first set of openings is disposed between an antenna of the plurality of antennas and an opening in the second set of openings.

2. The electronic device of claim 1,
wherein the first set of openings includes slits.

3. The electronic device of claim 1 or 2,
wherein the conductive structure, extending perpendicularly from the first conductive portion, is integrally formed with the bracket.

4. The electronic device of any one of claims 1 to 3,
wherein each opening in the first set of openings has cross-shape for cross polarization.

5. The electronic device of claim 4,
wherein each opening in the first set of openings includes a first portion and a second portion crossing the first portion,
wherein the first portion is parallel to the direction, and
wherein the second portion is perpendicular to the direction.

6. The electronic device of claim 4,
wherein each opening in the first set of openings includes a first portion and a second portion crossing the first portion, and
wherein the first portion and the second portion are inclined with respect to the direction.

7. The electronic device of claim 5,
wherein the antenna module is configured to transmit or receive signals with designated operating frequency, and
wherein a first length of the first portion and a second length of the second portion substantially correspond to 1/4 of a wavelength corresponding to the designated operating frequency.

8. The electronic device of claim 5,
wherein, when viewing the conductive structure from below, each opening in the second set of openings has a size such that each opening in the first set of openings is visible through the corresponding opening in the second set of openings.

9. The electronic device of any one of claims 1 to 8,
wherein the antenna module is configured to transmit or receive signals with designated operating frequency, and
wherein a gap between the second conductive portion and the conductive structure substantially corresponds to 1/8 of a wavelength corresponding to the designated operating frequency.

10. The electronic device of any one of claims 1 to 9, further comprising a housing including:
a peripheral part configured to define at least portion of a side wall of the electronic device, and
a supporting part, surrounded by the peripheral part, configured to support one or more electronic components of the electronic device, and
wherein the antenna module is disposed in the housing such that the plurality of antennas disposed on the PCB face in the direction.

11. The electronic device of claim 10, further comprising:
another antenna module, disposed in the housing, comprising antennas facing in another direction different from the direction; and
another bracket configured to accommodate the other antenna module.

12. The electronic device of claim 10,
wherein the direction corresponds to a direction of the side wall of the electronic device; and
wherein the other direction corresponds to a direction of a front side of the electronic device or a direction of a rear side of the electronic device.

13. The electronic device of any one of claims 1 to 12,
wherein the bracket includes a through hole through which a fastener coupled to the supporting part passes, the bracket being fastened to the supporting part through the fastener.

14. The electronic device of any one of claims 1 to 13,
wherein the first set of openings and the second set of openings are configured to expand a coverage of the antenna module in other directions different from the direction by causing diffraction or reflection of electromagnetic waves from the plurality of antennas.

15. The electronic device of any one of claims 1 to 14, further comprising a foldable housing including:
a first housing part, and
a second housing part rotatably coupled to the first housing part,
wherein the antenna module is disposed in the first housing part.
